(19) Europäisches Patentamt
European Patent Office
Office européen des brevets

(11) EP 1 496 686 A1

(12) # EUROPEAN PATENT APPLICATION
published in accordance with Art. 158(3) EPC

(43) Date of publication:
**12.01.2005 Bulletin 2005/02**

(21) Application number: **03746484.9**

(22) Date of filing: **14.04.2003**

(51) Int Cl.$^7$: **H04N 3/32**

(86) International application number:
**PCT/JP2003/004724**

(87) International publication number:
**WO 2003/088644 (23.10.2003 Gazette 2003/43)**

(84) Designated Contracting States:
**DE FR GB**

(30) Priority: **17.04.2002 JP 2002114563**
**04.02.2003 JP 2003026738**
**10.04.2003 JP 2003105948**

(71) Applicant: **MATSUSHITA ELECTRIC INDUSTRIAL CO., LTD.**
**Kadoma-shi, Osaka 571-8501 (JP)**

(72) Inventor: **YAMATE, Kazunori**
**Ibaraki-shi, Osaka 567-0885 (JP)**

(74) Representative:
**Leson, Thomas Johannes Alois, Dipl.-Ing.**
**Tiedtke-Bühling-Kinne & Partner GbR,**
**TBK-Patent,**
**Bavariaring 4**
**80336 München (DE)**

(54) ## VIDEO DISPLAY APPARATUS

(57) A video display apparatus comprises a luminance signal processing circuit, a color-difference signal processing circuit, an RGB matrix circuit, a CRT drive circuit, a plurality of VM coils, a plurality of scanning-speed modulation circuit blocks, a horizontal deflection circuit, a vertical deflection circuit, a horizontal deflection coil, and a vertical deflection coil. An electron beam emitted inside the CRT by the CRT drive circuit is scanned horizontally and vertically by the horizontal deflection coil and the vertical deflection coil. Velocity modulation currents are supplied to the plurality of VM coils by the plurality of scanning-speed modulation circuit blocks. This results in the generation of velocity modulation magnetic fields from the plurality of VM coils, thereby partially modulating the velocity of the horizontally scanned electron beam.

Fig. 1

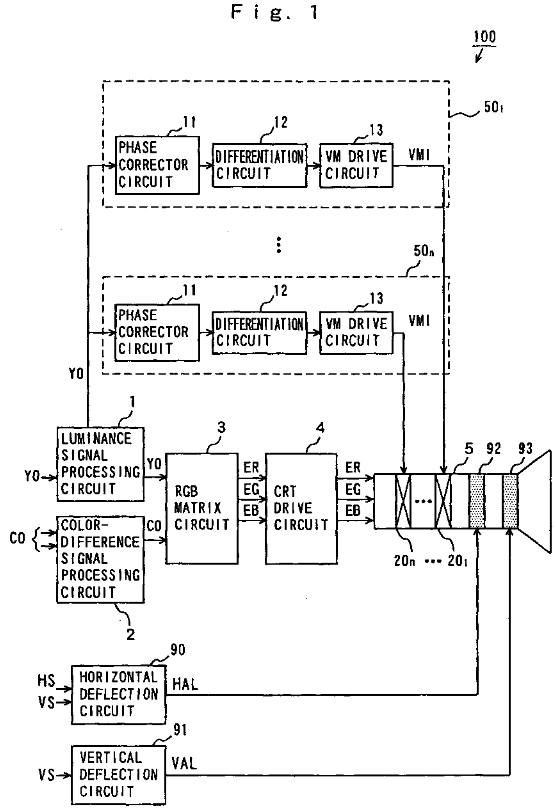


EP 1 496 686 A1

## Description

Technical Field

The present invention relates to a video display apparatus having a function of correcting the contour of an image.

Background Art

Conventionally, there has been a video display apparatus in which the scanning speed of an electron beam is modulated for correcting the contour of an image displayed on a cathode ray tube (hereinafter abbreviated to CRT) or the like. As such a video display apparatus, JP 1-29173 A, for example, proposes a signal generation circuit for velocity modulation.

Fig. 12 is a block diagram showing the configuration of the velocity modulation signal generation circuit, and Fig. 13 is a schematic diagram showing the shape and configuration of the velocity modulation coil shown in Fig. 12. In addition, Fig. 14 is a waveform diagram for explaining the operation of the velocity modulation signal generation circuit shown in Fig. 12.

The velocity modulation signal generation circuit 70 shown in Fig. 12 comprises a luminance signal processing circuit 71, a color-difference signal processing circuit 72, an RGB matrix circuit 73, a CRT drive circuit 74, a phase corrector circuit 76, a differentiation circuit 77, a velocity modulation (hereinafter abbreviated to VM) drive circuit 78, a CRT 75, and a velocity modulation (VM) coil 79.

As shown in Fig. 13 (a), a plurality of coils are connected in series in the VM coil 79. The VM coil 79 can be represented by an equivalent circuit, as shown in Fig. 13 (b). Although each of the coils is shown to have one turn in Fig. 13 (a), each coil has, in general, several turns. The VM coil 79 is supplied with a velocity modulation current VMI described later.

The luminance signal processing circuit 71 and the color-difference signal processing circuit 72 each have a delay circuit (not shown).

In the velocity modulation signal generation circuit 70 shown in Fig. 12, a luminance signal Y is input to the luminance signal processing circuit 71, while a color-difference signal C is input to the color-difference processing circuit 72.

The luminance signal Y input to the luminance signal processing circuit 71 is delayed for a predetermined period of time while being processed for correction of an image, and the processed luminance signal Y is applied to the RGB matrix circuit 73. Fig. 14 (a) shows one example of the waveform of the processed luminance signal Y.

The color-difference signal C is delayed for a predetermined period of time while being processed for correction of an image, and the processed color-difference signal C is applied to the RGB matrix circuit 73.

In the RGB matrix circuit 73, primary color signals, ER, EG, EB corresponding to the respective luminances of red, green, and blue are generated based on the luminance signal Y and color-difference signal C. Each of the generated primary color signals ER, EG, EB is applied to the CRT drive circuit 74.

In the CRT drive circuit 74, the primary color signals ER, EG, EB applied by the RGB matrix circuit 73 are amplified. Fig. 14 (b) shows one example of the waveform of the primary color signal ER. In the CRT 75, an electron beam based on the primary color signals ER, EG, EB is emitted.

The electron beam is scanned horizontally and vertically on the screen of CRT 75 by means of a horizontal deflection magnetic field and a vertical deflection magnetic field generated by a horizontal deflection coil and a vertical deflection coil, respectively (not shown). This allows displaying of an image on the screen of CRT 75.

Moreover, the luminance signal Y input to the luminance signal processing circuit 71 (Fig. 14 (a)) is processed for correction of an image, and also applied to the phase corrector circuit 76. In the phase corrector circuit 76, the phase of the luminance signal Y is corrected. The corrected luminance signal Y is applied to the differentiation circuit 77.

In the differentiation circuit 77, the luminance signal Y is first-order differentiated to generate a velocity modulation signal. The generated velocity modulation signal is applied to the VM drive circuit 78.

In the VM drive circuit 78, a velocity modulation current VMI is output based on the velocity modulation signal generated by the differentiation circuit 77. Fig. 14 (c) shows one example of the waveform of the velocity modulation current VMI.

As shown in Fig. 14 (b), (c), the delay time of the luminance signal Y in the luminance signal processing circuit 71 and the delay time of the color difference signal C in the color-difference processing circuit 72 are set so that a rising edge and a falling edge of the primary color signal ER correspond to a peak position and a bottom position of the velocity modulation current VMI, respectively.

The velocity modulation current VMI output from the VM drive circuit 78 is supplied to the VM coil 79. This causes generation of a velocity modulation magnetic field from the VM coil 79.

Fig. 14 (d) shows a magnetic field MT obtained by synthesizing the horizontal deflection magnetic field generated by the horizontal deflection coil (not shown) and the velocity modulation magnetic field generated by the VM coil 79 based on the velocity modulation current VMI shown in Fig. 14 (c).

As seen from Fig. 14 (d), the horizontal deflection magnetic field generated by the horizontal deflection coil changes partially at points P and Q, corresponding to the velocity modulation current VMI shown in Fig. 14 (c). This allows the horizontal scanning speed of an electron beam to be partially modulated.

As a result, the luminance distribution on the screen of CRT 75 abruptly changes according to the changes of the luminance signal Y, so that contour correction for an image is provided. Fig. 14 (e) shows a luminance distribution LU on the screen of the CRT 75 in this case.

The horizontal scanning speed of an electron beam is modulated as in the above, so that the display of a precise contour is realized.

By the way, since in the velocity modulation signal generation circuit 70 shown in Fig. 12 the velocity modulation signal is obtained by the first-order differentiation of the luminance signal Y, the velocity modulation signal has very abrupt rising and falling edges. In other words, the velocity modulation signal has a high frequency component.

Because of the frequency characteristic of the VM drive circuit 78, however, the VM drive circuit 78 can follow limited frequencies of the velocity modulation signal, as will now be described. Normally, the VM drive circuit 78 can follow only up to about several MHz.

Here, assuming that L is the inductance of the VM coil 79; I is the current value of the velocity modulation current VMI supplied to the VM coil 79; and f is the frequency of the velocity modulation current VMI supplied to the VM coil 79, the output voltage of the VM drive circuit 78 (hereinafter referred to as drive voltage), $V_L$, is expressed by the following equation (1):

$$V_L = 2\pi fLI \qquad (1)$$

where the drive voltage $V_L$ to be applied to the VM coil 79 by the VM drive circuit 78 is dependent upon the frequency f of the velocity modulation current VMI supplied to the VM coil 79. That is, in order to increase the frequency f of the velocity modulation current VMI, it is necessary to increase the drive voltage $V_L$. Nevertheless, the drive voltage $V_L$ is limited by the withstand voltage of a transistor contained in the VM drive circuit 78. Consequently, when the frequency of the velocity modulation signal is high, the voltage to be applied to the VM coil 79 by the VM drive circuit 78 exceeds the upper limit of the drive voltage $V_L$.

Moreover, the VM coil 79 has capacitance components consisting of stray capacitance and line capacitance as well as inductance components. Therefore, the VM coil 79 has a low pass filter characteristic because of the inductance components and capacitance components. In this case, the greater the inductance components of the VM coil 79, the lower the cutoff frequency in the low pass filter characteristic.

As a result of this, when the frequency of the velocity modulation signal exceeds a certain value, the VM drive circuit 78 cannot follow the frequency of the velocity modulation signal. That is, the velocity modulation current VMI cannot follow the frequency of the velocity modulation signal.

It is assumed, for example, that the inductance of the VM coil 79 is 5 μH, and the voltage supplied to the VM coil 79 is 1 Ap-p. In this case, when the frequencies of the velocity modulation signal are 1 MHz, 10 MHz, and 100 MHz, voltages to be applied to the VM coil 79 by the VM drive circuit 78 are 31.4 Vp-p, 314 Vp-p, and 3140 Vp-p, respectively, based on the equation (1) above. In this manner, the voltage to be applied to the VM coil 79 by the VM drive circuit 78 increases with an increase in the frequency of the velocity modulation signal.

Assuming the upper limit of the drive voltage $V_L$ of the VM drive circuit 78 to be about 140 Vp-p, the voltage to be applied to the VM coil 79 greatly exceeds the upper limit of the drive voltage $V_L$ of the VM drive circuit 78 when the frequencies of the velocity modulation signal are 10 MHz and 100 MHz. Consequently, the VM drive circuit 78 cannot follow the frequency of the velocity modulation signal. As a result, it is not possible to precisely display the contour of an image including a high frequency component.

## Disclosure of Invention

An object of the present invention is to provide a video display apparatus in which contour correction for an image including a high-frequency component can be made.

A video display apparatus according to one aspect of the present invention comprises an electron beam scanning apparatus that scans on a screen an electron beam according to an input luminance signal, thereby producing a luminance distribution on the screen for the display of an image; a plurality of velocity modulation coils provided in the electron beam scanning apparatus, each generating a modulation magnetic field for modulating the scanning speed of the electron beam; and a plurality of scanning-speed modulation circuits that supply the plurality of velocity modulation coils with currents for modulating the scanning speed, respectively, based on the input luminance signal.

In the video display apparatus according to the present invention, the electron beam according to the input luminance signal is scanned on the screen by the electron beam scanning apparatus, and the luminance distribution is produced on the screen for the display of an image. In addition, the plurality of velocity modulation coils are supplied with the currents for modulating the scanning speed by the plurality of scanning-speed modulation circuits, respectively. This allows generation of the modulation magnetic field from each of the plurality of velocity modulation coils so as to modulate the scanning speed of the electron beam.

In this case, the provision of the plurality of velocity modulation coils makes it possible to decrease the inductance of each of the velocity modulation coils, so that the voltage to be applied to each of the velocity modulation coils can be decreased while the cut-off frequency of each of the velocity modulation coils can be increased. Consequently, each of the scanning-speed modulation circuits can follow a high frequency.

It is, therefore, possible to modulate the scanning speed of an electron beam in a high-frequency region without lowering the capability of speed modulation function, even when the luminance signal includes a high-frequency component, so that contour correction for an image including a high-frequency component can be made. As a result, an image including a high-frequency component can be precisely displayed.

The plurality of velocity modulation coils may have the same number of turns. In this case, each of the plurality of velocity modulation coils with the same number of turns is supplied with the current for modulating the scanning speed. This makes it possible to decrease the inductance of each of the velocity modulation coils.

Each of the plurality of scanning-speed modulation circuits may include a differentiation circuit that differentiates the luminance signal. In this case, the luminance signal input to each of the plurality of scanning-speed modulation circuits is differentiated by the differentiation circuit, and the current based on the differential waveform is supplied to each of the plurality of velocity modulation coils. Consequently, the contour of an image is emphasized.

The plurality of velocity modulation coils may have different numbers of turns. In this case, the plurality of velocity modulation coils with different numbers of turns are supplied with the respective currents for modulating the scanning speed. This makes it possible to provide velocity modulation based on the luminance signal having various frequency regions while decreasing the inductance of each of the velocity modulation coils. As a result, fine contour correction according to the frequency of the luminance signal can be made, and an image having various frequency components can be precisely displayed.

The plurality of scanning-speed modulation circuits may each include a differentiation circuit that differentiates the luminance signal; the differentiation circuits in the plurality of scanning-speed modulation circuits may have different differential frequencies; and the plurality of scanning-speed modulation circuits may be connected to the plurality of velocity modulation coils, respectively, such that a differentiation circuit having a lower differential frequency is combined with a velocity modulation coil having a greater number of turns.

In this case, the luminance signal input to each of the plurality of scanning-speed modulation circuits is differentiated, according to its frequency, by any of the plurality of differentiation circuits, and the current based on the differential waveform is supplied to the corresponding velocity modulation coil. Consequently, the contour of an image is emphasized.

In particular, when the luminance signal has low frequencies, the scanning-speed modulation coil can follow the frequencies of the luminance signal even with a large number of turns in the velocity modulation coil, i.e., a large inductance. On the contrary, when the luminance signals has high frequencies, the scanning-speed modulation circuit can follow the frequencies of the luminance signal by decreasing the number of turns in the velocity modulation coil, i.e., a smaller inductance. Consequently, the combination of a differential circuit having a lower differential frequency and a velocity modulation coil having a greater number of turns makes it possible to provide velocity modulation based on the luminance signal of a wide frequency region. As a result, fine contour correction according to the frequency of the luminance signal can be made, and an image having various frequency components can be precisely displayed.

Each of the plurality of scanning-speed modulation circuits may further include a low pass filter in a stage prior to the differentiation circuit; the low pass filters in the plurality of scanning-speed modulation circuits may have different cut-off frequencies; and the cut-off frequency of the low pass filter in each of the plurality of scanning-speed modulation circuits may be set such that a low pass filter having a lower cut-off frequency is combined with a differentiation circuit having a lower differential frequency.

In this case, in the stage prior to the differentiation circuit, predetermined frequency regions of the luminance signals input to the respective plurality of scanning-speed modulation circuits are cut by the low pass filters having different cut-off frequencies.

In particular, the luminance signal which has passed the low pass filter having a lower cut-off frequency is applied to the differentiation circuit having a lower differential frequency. This emphasizes the low-frequency component of the luminance signal. On the contrary, the luminance signal which has passed the low pass filter having a higher cut-off frequency is applied to the differentiation circuit having a higher differential frequency. This emphasizes the high-frequency component of the luminance signal.

Consequently, even when the luminance signal has various frequency components, contour correction can be made with the frequency components thereof being emphasized. As a result, fine contour correction according to the frequency of the luminance signal can be made, and an image having various frequency components can be precisely displayed.

The plurality of scanning-speed modulation circuits may include differentiation circuits that perform differentiation of different orders with respect to the respective luminance signals, and the plurality of scanning-speed modulation circuits may be connected to the plurality of velocity modulating circuits, respectively, such that a differentiation circuit that performs lower-order differentiation is combined with a velocity modulation coil having a greater number of turns.

In this case, the luminance signals input to the plurality of scanning-speed modulation circuits are subject to differentiation of different orders, respectively, by the differentiation circuits that perform differentiation of different orders with respect to the respective luminance signals.

In particular, the differential waveform obtained by the differentiation circuit that performs lower-order differentiation has low frequencies. In this case, the scanning-speed modulation circuit connected to the velocity modulation coil having a greater number of turns can follow the frequencies of the luminance signal.

On the other hand, the waveform obtained by the differentiation circuit that performs higher-order differentiation has high frequencies. In this case, the scanning-speed modulation circuit connected to the velocity modulation coil having a smaller number of turns can follow the frequencies of the luminance signal.

As described above, the combination of the differentiation circuit that performs lower-order differentiation and the velocity modulation coil having a greater number of turns makes it possible to emphasize the contour of an image, for the luminance signal of a wide frequency region. As a result, strong contour correction according to the frequency of the luminance signal can be made, and an image having various frequency components can be precisely displayed.

The electron beam scanning apparatus may include a cathode ray tube; a horizontal deflection device that deflects an electron beam in the cathode ray tube in the horizontal direction; and a vertical deflection device that deflects an electron beam in the cathode ray tube in the vertical direction, and the plurality of velocity modulation coils may be arranged so as to modulate the scanning speed of the electron beam in the horizontal direction.

In this case, in the cathode ray tube, the electron beam is deflected in the horizontal direction by the horizontal deflection device, and deflected in the vertical direction by the vertical deflection device. This allows an image displayed on the screen of the cathode ray tube. In addition, the scanning speed of the electron beam in the horizontal direction is modulated by the plurality of velocity modulation coils. Consequently, contour correction for an image is made, and a precise image having an emphasized contour is displayed.

A video display apparatus according to another aspect of the present invention comprises an electron beam scanning apparatus that scans on a screen an electron beam according to an input luminance signal, thereby producing a luminance distribution on the screen for the display of an image; first and second saddle-type velocity modulation coils provided opposed to each other in the electron beam scanning apparatus, each producing a modulation magnetic field for modulating the scanning speed of the electron beam; and a scanning-speed modulation circuit that supplies the first and second velocity modulation coils with currents for modulating the scanning speed, respectively, based on the input luminance signal.

In the video display apparatus according to the present invention, the electron beam according to the input luminance signal is scanned on the screen by the electron beam scanning apparatus, and the luminance distribution is produced on the screen for the display of an image. In addition, the first and second saddle-type velocity modulation coils provided opposed to each other in the electron beam scanning apparatus are supplied by the scanning-speed modulation circuit with the currents for modulating the scanning speed based on the luminance signal. This allows generation of the modulation magnetic field from each of the plurality of velocity modulation coils so as to modulate the electron beam.

In this case, the provision of the first and second velocity modulation coils makes it possible to decrease the inductance of each of the velocity modulation coils, thus allowing a decrease in the voltage to be applied to each of the modulation coils and an increase in the cut-off frequency of each of the velocity modulation coils. Consequently, the scanning-speed modulation circuit can follow high frequencies. Therefore, the scanning speed of the electron beam can be modulated, even when the luminance signal includes a high-frequency component. As a result, contour correction for an image including a high-frequency component can be made, and an image having a high-frequency component can be precisely displayed.

The scanning-speed modulation circuit may include a signal generation circuit that generates a scanning-speed modulation signal based on the input luminance signal; and first and second current supply circuits that supply currents for modulating the scanning speed to the first and second velocity modulation coils, respectively, based on the scanning-speed modulation signal generated by the signal generation circuit.

In this case, the scanning-speed modulation signal is generated based on the luminance signal input by the signal generation circuit, and the first and second velocity modulation coils are supplied with the currents for modulating the scanning speed based on the scanning-speed modulation signal by the first and second current supply circuits, respectively.

This decreases the voltages to be applied to the first and second velocity modulation coils by the first and second current supply circuits, respectively. Consequently, the first and second current supply circuits can follow high frequencies. This makes it possible to modulate the scanning speed of the electron beam even when the luminance signal includes a high-frequency component. As a result, contour correction for an image including a high frequency component can be made, and an image having a high-frequency component can be precisely displayed.

The first and second velocity modulation coils may be connected in parallel with each other; and the scanning-speed modulation circuit may include a signal generation circuit that generates a scanning-speed modulation signal based on the input luminance signal and a current supply circuit that supplies the first and second velocity modulation coils with a current for modulating the scanning speed based on the scanning-speed modulation signal generated by the signal generation circuit.

In this case, in the scanning-speed modulation circuit, the scanning-speed modulation signal is generated based on the luminance signal input by the signal generation circuit, and the currents based on the scanning-speed modulation signal are supplied to the first and second velocity modulation coils connected in parallel with each other. The supply of currents based on the scanning-speed modulation signal to the first and second velocity modulation coils results in the modulation of the scanning speed.

In particular, the provision of the first and second velocity modulation coils in parallel decreases a synthesized inductance of the first and second velocity modulation coils, thereby decreasing the voltages to be applied to the first and second velocity modulation coils while increasing the cut-off frequencies of the first and second velocity modulation coils. Consequently, the scanning-speed modulation circuit can follow high frequencies. As a result, contour correction for an image including a high-frequency component can be made, and an image having a high-frequency component can be precisely displayed.

The electron beam scanning apparatus may include a cathode ray tube; a horizontal deflection device that deflects an electron beam in the cathode ray tube in the horizontal direction; and a vertical deflection device that deflects an electron beam in the cathode ray tube in the vertical direction, and the first and second velocity modulation coils may be arranged so as to modulate the scanning speed of the electron beam in the horizontal direction.

In this case, in the cathode ray tube, the electron beam is deflected in the horizontal direction and deflected in the vertical direction by the horizontal deflection device. This allows an image displayed on the screen of the cathode ray tube. In addition, the scanning speed of the electron beam in the horizontal direction is modulated by the first and second velocity modulation coils. This provides contour correction for an image. Consequently, an image with an emphasized contour is attained.

## Brief Description of Drawings

Fig. 1 is a block diagram showing the configuration of a video display apparatus according to a first embodiment;

Fig. 2 is a waveform diagram for explaining the operation of the video display apparatus shown in Fig. 1;

Fig. 3 is a block diagram showing the configuration of a video display apparatus according to a second embodiment;

Fig. 4 is a block diagram showing the configuration of a video display apparatus according to a third embodiment;

Fig. 5 is a block diagram showing the configuration of a video display apparatus according to a fourth embodiment;

Fig. 6 is a block diagram showing the configuration of a video display apparatus according to a fifth embodiment;

Fig. 7 is a block diagram showing one example of the video display apparatus according to the fifth embodiment provided with two scanning-speed modulation circuit blocks;

Fig. 8 is a schematic diagram showing the waveforms of a luminance signal applied to the scanning-speed modulation circuit blocks shown in Fig. 7; of velocity modulation currents supplied to respective VM coils by the scanning-speed modulation circuit blocks; and of velocity modulation magnetic fields produced by the plurality of VM coils;

Fig. 9 is a block diagram showing the configuration of a video display apparatus according to a sixth embodiment;

Fig. 10 is a block diagram showing the configuration of a video display apparatus according to a seventh embodiment;

Fig. 11 is a schematic diagram showing the shape and configuration of the velocity modulation coil shown in Fig. 10;

Fig. 12 is a block diagram showing the configuration of a velocity modulation signal generation circuit;

Fig 13 is a schematic diagram showing the shape and configuration of the velocity modulation coil shown in Fig. 12;

Fig. 14 is a waveform diagram for explaining the operation of the velocity modulation signal generation circuit shown in Fig. 12.

## Best Mode for Carrying Out the Invention

Description will hereinafter be made of embodiments of the present invention with reference to Fig. 1 to Fig. 11.

### (First Embodiment)

Fig. 1 is a block diagram showing the configuration of a video display apparatus according to a first embodiment, and Fig. 2 is a waveform diagram for use in illustrating the operation of the video display apparatus shown in Fig. 1.

The video display apparatus 100 according to the first embodiment comprises a luminance signal processing circuit 1, a color-difference signal processing circuit 2, an RGB matrix circuit 3, a cathode ray tube (hereinafter refereed to as CRT) drive circuit 4, a CRT 5, a plurality of velocity modulation (hereinafter abbreviated to VM) coils $20_1$ to $20_n$ (n is an integer not less than two), a plurality of scanning-speed modulation circuit blocks $50_1$ to $50_n$ (n is an integer not less than two), a horizontal deflection circuit 90, a vertical deflection circuit 91, a horizontal deflection coil 92, and a vertical deflection coil 93.

The scanning-speed modulation circuit blocks $50_1$ to $50_n$ each comprise a phase corrector circuit 11, a differentiation circuit 12, and a VM drive circuit 13, and they are individually connected to the respective VM coils $20_1$ to $20_n$. The VM coils $20_1$ to $20_n$, the horizontal deflection coil 92, and the vertical deflection coil 93 are mounted in the CRT 5.

In the present embodiment, each of the plurality of scanning-speed modulation circuit blocks $50_1$ to $50_n$ has the same configuration and performance, and each of the plurality of VM coils $20_1$ to $20_n$ has the same number of turns.

The luminance signal processing circuit 1 and the color-difference signal processing circuit 2 each have a delay circuit (not shown).

In the video display apparatus 100 shown in Fig. 1, a luminance signal Y0 is input to the luminance signal processing circuit 1, while a color difference signal C0 is input to the color-difference signal processing circuit 2. In addition, a horizontal synchronizing signal HS and a vertical synchronizing signal VS are input to the horizontal deflection circuit 90 and a vertical synchronizing signal VS is input to the vertical deflection circuit 91.

The luminance signal Y0 input to the luminance signal processing circuit 1 is delayed for a predetermined period of time while being processed for correction of an image, and the processed luminance signal Y0 is applied to the RGB matrix circuit 3. Fig. 2 (a) shows one example of the waveform of the processed luminance signal Y0.

The color difference signal C0 input to the color-difference signal processing circuit 2 is delayed for a predetermined period of time while being processed for correction of an image, and applied to the RGB matrix circuit 3.

In the RGB matrix circuit 3, primary color signals ER, EG, EB, corresponding to the respective luminances of red, green, and blue are generated based on the luminance signal Y0 and color difference signal C0. The generated primary signals ER, EG, EB are applied to the CRT drive circuit 4.

In the CRT drive circuit 4, the primary color signals ER, EG, EB applied from the matrix circuit 3 are amplified. Fig. 2 (b) shows one example of the waveform of the primary color signal ER. In the CRT 5, an electron beam based on the primary color signals, ER, EG, EB is emitted.

The horizontal deflection circuit 90 produces a horizontal deflection current HAL based on the input horizontal synchronizing signal HS and vertical synchronizing signal VS, supplying the produced current to the horizontal deflection coil 92. This results in the generation of a horizontal deflection magnetic field from the horizontal deflection coil. As a result, the above-mentioned electron beam is horizontally scanned on a screen.

The vertical deflection circuit 91 produces a vertical deflection current VAL based on the input vertical synchronizing signal VS, supplying the produced current to the vertical deflection coil 93. This results in the generation of a vertical deflection magnetic field from the vertical deflection coil 93. As a result, the above-mentioned electron beam is vertically scanned on the screen. Consequently, an image is displayed on the screen of the CRT 5.

Further, the luminance signal Y0 processed by the luminance signal processing circuit 1 (Fig. 2 (a)) is applied to the phase corrector circuit 11 in each of the scanning-speed modulation circuit blocks $50_1$ to $50_n$. In the phase corrector circuit 11, the phase of the luminance signal Y0 is corrected. The corrected luminance signal Y0 is applied to the differentiation circuit 12.

In the differentiation circuit 12, the luminance signal Y0 is first-order differentiated to generate a velocity modulation signal. The generated velocity modulation signal is applied to the VM drive circuit 13.

In the VM drive circuit 13, a velocity modulation current VMI is output based on the velocity modulation signal generated by the differentiation circuit 12. Fig. 2 (c) shows one example of the waveform of the velocity modulation current VMI.

Note that as shown in Fig. 2 (b), (c), the delay time of the luminance signal Y0 in the luminance signal processing circuit 1 and the delay time of the color difference signal C0 in the color-difference signal processing circuit 2 are set such that a rising edge and a falling edge of the primary color signal ER correspond to a peak position and a bottom position of the velocity modulation current VMI, respectively.

The velocity modulation currents VMI output from the VM drive circuits 13 in the scanning-speed modulation circuit blocks $50_1$ to $50_n$ are applied to the VM coils $20_1$ to $20_n$, respectively. This results in the generation of a velocity modulation magnetic from each of the VM coils $20_1$ to $20_n$.

Fig. 2 (d) shows a magnetic field MT 1 obtained by synthesizing the horizontal deflection magnetic field generated by the horizontal deflection coil 92 and the velocity modulation magnetic field generated by each of the VM coils $20_1$ to $20_n$ based on the velocity modulation magnetic field VMI shown in Fig. 2 (c).

As can be seen from Fig. 2 (d), the horizontal deflection magnetic field generated by the horizontal deflection coil 92 changes partially at points P and Q, corresponding to the velocity modulation current VMI shown in Fig. 2 (c). This allows the horizontal scanning speed of an electron beam to be partially modulated.

As a result, the luminance distribution on the screen of CRT 5 abruptly changes according to the changes of the luminance signal Y0, so that contour correction for an image is made. Fig. 2 (e) shows a luminance distribution LU 1 on the screen of the CRT 5 in this case.

In the present embodiment, the provision of the plurality of scanning-speed modulation circuit blocks $50_1$ to $50_n$ and the plurality of VM coils $20_1$ to $20_n$ allows precise display of a contour with abrupt rising and falling of the luminance signal Y0, as will be described later.

Here, the degree of velocity modulation for an electron beam made by the VM coil is expressed by ampere-turn (current flowing in the VM coil x number of turns in the VM coil).

Where n VM coils, $20_1$ to $20_n$, are used to realize a predetermined ampere-turn, the number of turns in each of the VM coils $20_1$ to $20_n$ can be decreased to 1/n the case using one VM coil. Consequently, the inductance in each of the VM coils $20_1$ to $20_n$ can be decreased to n/1.

For example, a case realizing four ampere-turns will be examined. Where one VM coil is used, a current of 1Ap-p is supplied with the number of turns in the VM coil set at four. Where four VM coils are used, on the other hand, a current of 1Ap-p is supplied with the number of turns in each of the VM coils set at one. Consequently, four ampere-turns can be realized.

Using four VM coils as in the above, the number of turns in each of the VM coils can be decreased to 1/4 the case using one VM coil. That is, the inductance in each of the VM coils can be decreased to 1/4.

In the video display apparatus 100 according to the present embodiment, the provision of the plurality of scanning-speed modulation circuit blocks $50_1$ to $50_n$ and the plurality of VM coils $20_1$ to $20_n$ makes it possible to reduce the inductance in each of the VM coils $20_1$ to $20_n$ to 1/n, as described above.

In this case, the voltage to be applied to each of the VM coils $20_1$ to $20_n$ is reduced, while the cut-off frequency of each of the VM coils $20_1$ to $20_n$ is increased. This allows each of the VM drive circuits 13 to follow the frequencies of the velocity modulation signal even when the velocity modulation signal has high frequencies. In other words, the velocity modulation current VMI supplied to each of the VM coils $20_1$ to $20_n$ can follow the velocity modulation signal. It is therefore possible to modulate the horizontal scanning speed of an electron beam in a high-frequency region without lowering the capability of velocity modulation function, thereby providing contour correction for an image including a high-frequency component. As a result, an image having a high-frequency component can be precisely displayed.

(Second Embodiment)

Fig. 3 is a block diagram showing the configuration of a video display apparatus according to a second embodiment.

The video display apparatus 100 according to the second embodiment has the same configuration as that of the video display apparatus 100 according to the first embodiment except that it comprises a plurality of VM coils $21_1$ to $21_n$ (n is an integer not less than two) in place of the plurality of VM coils $20_1$ to $20_n$ according to the first embodiment.

The VM coils $21_1$ to $21_n$ have different numbers of turns from one another, and the VM coil $21_n$ has a smaller number of turns than that of the VM coil $21_{n-1}$. In Fig. 3, the number of slashes represents the number of turns in each of the VM coils $21_1$ to $21_n$. In Fig. 3, the VM coil $21_1$ has three turns, whereas the VM coil $21_n$ has one turn.

The inductance in each of the VM coils $21_1$ to $21_n$ is proportional to the number of turns in each of the VM coils $21_1$ to $21_n$. That is, the greater the number of turns in a VM coil, the greater the inductance of the VM coil. Conversely, the smaller the number of turns in a VM coil, the smaller the inductance of the VM coil.

In the video display apparatus 100 according to the present embodiment, for the velocity modulation signal having low frequencies, suitable velocity modulation is made by the VM coil with a greater number of turns, whereas for the velocity modulation signal having high frequencies, suitable velocity modulation is made by the VM coil with a smaller number of turns. Consequently, the horizontal scanning speed of an electron beam can be modulated in various frequency regions, and fine contour correction according to the frequencies of the luminance signal can be made. As a result, an image having various frequency components can be precisely displayed.

Note that not all of the VM coils $21_1$ to $21_n$ may necessarily have different numbers of turns, and some of the VM coils $21_1$ to $21_n$ may have the same number of turns.

(Third Embodiment)

Fig. 4 is a block diagram showing the configuration of a video display apparatus according to a third embodiment.

The video display apparatus 100 according to the third embodiment has the same configuration as that of the video display apparatus 100 according to the second embodiment except that it comprises a plurality of differentiation circuits $12_1$ to $12_n$ (n is an integer not less than 2) in place of the plurality of differentiation circuits 12 according to the second embodiment.

The differentiation circuits $12_1$ to $12_n$ have different differential frequencies. The differential frequency of the differentiation circuit $12_n$ is higher than that of

the differentiation circuit $12_{n-1}$.

In other words, with n being two, the differentiation circuit $12_1$ is set to perform first-order differentiation with respect to the luminance signal Y0 having lower frequencies, and the differentiation circuit $12_2$ is set to perform first-order differentiation with respect to the luminance signal Y0 having higher frequencies.

The scanning-speed modulation circuit blocks $50_1$ to 50n comprising the differentiation circuits $12_1$ to $12_n$ are connected to VM coils $21_1$ to $21_n$, respectively, which are the same as those of the second embodiment. In this case, the scanning-speed modulation circuit block comprising the differentiation circuit having lower frequencies is connected to the VM coil having a greater number of turns, whereas the scanning-speed modulation circuit block comprising the differentiation circuit having higher frequencies is connected to the VM coil having a smaller number of turns.

For example, with n being two, the scanning-speed modulation circuit block $50_1$ comprising the differentiation circuit $12_1$ having lower frequencies is connected to the VM coil $21_1$ having a greater number of turns.

On the other hand, the scanning-speed modulation circuit block $50_2$ comprising the differentiation circuit $12_2$ having higher frequencies is connected to the VM coil $21_2$ having a smaller number of turns.

As described above, the combination of the differentiation circuit having lower frequencies and a VM coil having a greater number of turns makes it possible to modulate the scanning speed of an electron beam in a low-frequency region, whereas the combination of a differentiation circuit having higher frequencies and a VM coil having a smaller number of turns makes it possible to modulate the scanning speed of an electron beam in a high-frequency region. Consequently, the horizontal scanning speed of an electron beam can be modulated in various frequency regions, and fine contour correction according to the frequencies of the luminance signal can be made. As a result, an image having various frequency components can be precisely displayed.

Note that not all of the differentiation circuits $12_1$ to $12_n$ may necessarily have different differential frequencies, and some of the differentiation circuits $12_1$ to $12_n$ may have the same differential frequency.

(Fourth Embodiment)

Fig. 5 is a block diagram showing the configuration of a video display apparatus according to a fourth embodiment.

The video display apparatus 100 according to the fourth embodiment has the same configuration as that of the video display apparatus 100 according to the third embodiment except that the plurality of scanning-speed modulation circuit blocks $50_1$ to $50_n$ according to the third embodiment further comprise low pass filters (hereinafter abbreviated to LPF) $14_1$ to $14_n$ (n is an integer not less than two), respectively.

In the scanning-speed modulation circuit blocks $50_1$ to $50_n$, the LPFs $14_1$ to $14_n$ are provided in the respective stages prior to the phase corrector circuits 11. The cut-off frequencies of the LPFs $14_1$ to $14_n$ are different from one other. The LPF having a higher cut-off frequency is connected to the stage prior to the differentiation circuit having a higher differential frequency. The LPF having a lower cut-off frequency is connected to the preceding stage of the differentiation circuit having a lower differential frequency. This allows first-order differentiation of the luminance signals Y0 having the frequencies according to preset frequency regions by the respective differentiation circuits $12_1$ to $12_n$.

With n being two, for example, the cut-off frequency of the LPF $14_1$ is lower than the cut-off frequency of the LPF $14_2$. Accordingly, the luminance signal Y0 having lower frequencies which passes the LPF $14_1$ is applied to the differentiation circuit $12_1$ having a lower differential frequency. This allows first-order differentiation of the luminance signal Y0 having lower frequencies in the differentiation circuit $12_1$.

On the other hand, the luminance signal Y0 having higher frequencies which passes the LPF $14_2$ is applied to the differentiation circuit $12_2$ having a higher differential frequency. This allows first-order differentiation of the luminance signal Y0 having higher frequencies in the differentiation circuit $12_2$.

The scanning-speed modulation circuit block $50_1$ comprising the LPF $14_1$ of a lower cut-off frequency and the differentiation circuit $12_1$ of a lower differential frequency is connected to the VM coil $21_1$ having a greater number of turns.

On the other hand, the scanning-speed modulation circuit block $50_2$ comprising the LPG $14_2$ of a higher cut-off frequency and the differentiation circuit $12_2$ of a higher differential frequency is connected to the VM coil $21_1$ having a smaller number of turns.

As described above, the LPF of a lower cut-off frequency and the differentiation circuit of a lower differential frequency are combined with the VM coil having a greater number of turns, so that the scanning speed can be modulated for an electron beam in a low-frequency region, whereas the LPF of a higher cut-off frequency and the differentiation circuit of a higher differential frequency are combined with the VM coil having a smaller number of turns, so that the scanning speed can be modulated for an electron beam in a high-frequency region. Consequently, the combination of the LPFs $14_1$ to $14_n$, the differentiation circuits $12_1$ to $12_n$, and the scanning-speed modulation circuit blocks $50_1$ to $50_n$ allows the modulation of the horizontal scanning speed of an electron beam in significantly increased frequency regions, thereby providing fine contour correction according to the frequencies of the luminance signal. As a result, an image having a very large amount of frequency components can be precisely displayed.

Note that not all of the LPFs $14_1$ to $14_n$ may necessarily have different cut-off frequencies, and some of the LPFs $14_1$ to $14_n$ may have the same cut-off frequency.

(Fifth Embodiment)

Fig. 6 is a block diagram showing the configuration of a video display apparatus according to a fifth embodiment.

The video display apparatus 100 according to the fifth embodiment has the same configuration as that of the video display apparatus 100 according to the third embodiment except that it comprises first-order differentiation circuit $15_1$ to nth-order differentiation circuit $15_n$ in place of the plurality of differentiation circuits $12_1$ to $12_n$ according to the third embodiment.

The first-order differentiation circuit $15_1$ performs first-order differentiation with respect to an applied luminance signal Y0, and the nth-order differentiation circuit $15_n$ performs nth-order differentiation with respect to an applied luminance signal Y0. Note that n is an integer not less than two.

With n being two, for example, the first-order differentiation circuit $15_1$ performs first-order differentiation with respect to the luminance signal Y0 applied from the phase corrector circuit 11, whereas the second-order differentiation circuit $15_2$ performs second-order differentiation with respect to the luminance signal Y0 applied from the phase corrector circuit 11.

The scanning-speed modulation circuit blocks $50_1$ to $50_n$ comprising the first-order differentiation circuit $15_1$ to nth-order differentiation circuit $15_n$ are connected to the VM coils $21_1$ to $21_n$, respectively, which are the same as those of the second embodiment.

Referring to Figs. 7 and 8, description will now be made of the configuration and operation of the video display apparatus 100 with n being two.

Fig. 7 is a block diagram showing one example of the video display apparatus according to the fifth embodiment provided with two scanning-speed modulation circuit blocks. Fig. 8 is a schematic diagram showing the waveform of a luminance signal applied to the scanning-speed modulation circuit blocks shown in Fig. 7, the waveforms of velocity modulation currents supplied to respective VM coils by the scanning-speed modulation circuit blocks, and the waveforms of velocity modulation magnetic fields produced by the plurality of VM coils.

Where n is two, the video display apparatus 100 comprises two scanning-speed modulation circuit blocks $50_1$, $50_2$.

In the scanning-speed modulation circuit blocks $50_1$, $50_2$, the luminance signal Y0 shown in Fig. 8 (a) is input to the respective phase corrector circuits 11 by the luminance signal processing circuit 1.

In the scanning-speed modulation circuit block $50_1$, the luminance signal Y0 applied to the first-order differentiation circuit $15_1$ from the phase corrector circuit 11 is first-order differentiated by the first-order differentiation circuit $15_1$ to generate a velocity modulation signal. The VM drive circuit 13 supplies a velocity modulation current VMI1 represented by the chain line in Fig. 8 (b) to a VM coil $21_1$ based on the generated velocity modulation signal. This causes the VM coil $21_1$ to generate a velocity modulation magnetic field M1.

In the scanning-speed modulation circuit block $50_2$, the luminance signal Y0 applied to the second-order differentiation circuit $15_2$ from the phase corrector circuit 11 is second-order differentiated to generate a velocity modulation signal. The VM drive circuit 13 supplies a velocity modulation current VMI 2 represented by the broken line in Fig. 8 (b) to a VM coil $21_2$ based on the generated velocity modulation signal. This causes the VM coil $21_2$ to generate a velocity modulation magnetic field M2.

Fig. 8 (c) shows one example of the waveform of the velocity modulation magnetic field M1 from the VM coil $21_1$ by the chain line, one example of the waveform of the velocity modulation magnetic field M2 from the VM coil $21_1$ by the chain line, and one example of the waveform of the velocity modulation magnetic field M12 obtained by synthesizing the velocity modulation magnetic field M1 and the velocity modulation magnetic field M2 by the solid line.

As can be seen from Fig.8 (c), in the waveform of the velocity modulation magnetic field M12 obtained by synthesizing the velocity modulation magnetic field M1 and the velocity modulation magnetic field M2, the rising period and falling period are shorter than those of the velocity modulation magnetic field M1. In this case, rising and falling of the velocity modulation can be provided more abruptly, leading to stronger contour correction for an image.

By the way, when the luminance signal Y0 is n-th order differentiated in the video display apparatus 100 shown in Fig. 6, the frequencies of the resulting velocity modulation signal increase as n increases.

Therefore, in the present embodiment, the scanning-speed modulation circuit block having a higher-order differentiation circuit is connected to the VM coil having a smaller number of turns, whereas the scanning-speed modulation circuit block having a lower-order differentiation circuit is connected to the VM coil having a greater number of turns. This allows the VM drive circuit connected to the higher-order differentiation circuit to follow the velocity modulation signal having higher frequencies, and also allows the VM drive circuit connected to the lower-order differentiation circuit to follow the velocity modulation signal having lower frequencies.

As can be seen from Fig. 7, the scanning-speed modulation circuit block $50_1$ comprising the first-order differentiation circuit $15_1$ is connected to the VM coil $21_1$ having a greater number of turns, whereas the scanning-speed modulation circuit block $50_2$ comprising the second-order differentiation circuit $15_2$ is connected

to the VM coil $21_2$ having a smaller number of turns. In this case, because of the smaller number of turns in the VM coil $21_2$, the VM drive circuit 13 can follow the velocity modulation signal having high frequencies.

As described above, the combination of the lower-order differentiation circuit and the VM coil having a greater number of turns makes it possible to modulate the scanning speed of an electron beam in a low-frequency region, whereas the combination of the higher-order differentiation circuit and the VM coil having a smaller number of turns makes it possible to modulate the scanning speed of an electron beam in a high-frequency region. Consequently, the horizontal scanning speed of an electron beam can be modulated in various frequency regions, leading to strong contour correction according to the frequencies of the luminance signal. As a result, an image having various frequency components can be precisely displayed.

Note that not all of the first-order differentiation circuit $15_1$ to nth-order differentiation circuit $15_n$ may necessarily perform differentiation of different orders, and some of the first-order differentiation circuit $15_1$ to nth-order differentiation circuit $15_n$ may perform differentiation of the same order.

(Sixth Embodiment)

Fig. 9 is a block diagram showing the configuration of a video display apparatus according to a sixth embodiment.

The video display apparatus 100 according to the sixth embodiment has the same configuration as that of the video display apparatus according to the first embodiment except that it comprises a scanning-speed modulation circuit block 50 having two VM drive circuits 13a, 13b in place of the plurality of scanning-speed modulation circuit blocks $50_1$ to $50_n$ according to the first embodiment, and a pair of VM coils 22a, 22b in place of the plurality of VM coils $20_1$ to $20_n$ according to the first embodiment.

In the scanning-speed modulation circuit block 50 according to the present embodiment, a velocity modulation signal generated by the differentiation circuit 12 is applied to the two VM drive circuits 13a, 13b.

The VM coils 22a, 22b are each constituted by a saddle-type coil, one saddle-type coil and the other being provided at an upper part and a lower part of the CRT 5, respectively, to be opposed to each other. The VM coils 22a, 22b have the same number of turns.

The VM drive circuit 13a is connected to the VM coil 22a, supplying with the VM coil 22a a velocity modulation current VMI based on the velocity modulation signal. On the other hand, the VM drive circuit 13b is connected to the VM coil 22b, supplying with the VM coil 22b a velocity modulation current VMI based on the velocity modulation signal.

In this case, the velocity modulation currents produced by the respective VM coil 22a, 22b can be reduced to half the case using one VM coil conventionally. Therefore, each of the inductances of the VM coils 22a, 22b can be reduced to half with the velocity modulation current conventionally obtained by using one VM coil being assured.

In the video display apparatus 100 according to the present embodiment, the provision of the two VM drive circuits 13a, 13b, and the pair of VM coils 22a, 22b makes it possible to reduce each of the inductances of the VM coils 22a, 22b to half, as described above. This allows each of the VM drive circuits 13a, 13b to follow the frequencies of the velocity modulation signal even when the velocity modulation signal have high frequencies. In other words, the velocity modulation currents VMI supplied to the respective VM coils 22a, 22b can follow the velocity modulation signal. Consequently, it is possible to modulate the horizontal scanning speed of an electron beam in a high-frequency region, thereby providing contour correction for an image including a high-frequency component. As a result, an image having a high-frequency component can be precisely displayed.

(Seventh Embodiment)

Fig. 10 is a block diagram showing the configuration of a video display apparatus according to a seventh embodiment, and Fig. 11 is a schematic diagram showing the shapes and configurations of the velocity modulation coils shown in Fig. 10.

The video display apparatus 100 according to the seventh embodiment has the same configuration as that of the video display apparatus 100 according to the first embodiment except that it comprises a scanning-speed modulation circuit block 50 in place of the plurality of scanning-speed modulation circuit blocks $50_1$ to $50_n$ according to the first embodiment, and a pair of VM coils 23a, 23b, in place of the plurality of VM coils $20_1$ to $20_n$.

As shown in Fig. 11 (a), the VM coil 22a and VM coil 23b are connected in parallel with each other. Accordingly, a synthesized inductance of the VM coils 23a, 23b is reduced to half the inductance of one VM coil.

The VM coils 23a, 23b can be represented by an equivalent circuit as shown in Fig. 11 (b). Note that although each of the VM coils 23a, 23b is shown to have one turn in Fig. 11 (b), each of the VM coils 23a, 23b has, in fact, several turns. In addition, in the present embodiment, the upper VM coil 23a and lower VM coil 23b have the same number of turns. The VM drive circuit 13 is connected to the VM coils 23a, 23b connected in parallel.

When the VM coils 23a, 23b are supplied with a velocity modulation current VMI from the VM drive circuit 13 in the scanning-speed modulation circuit block 50, velocity modulation magnetic fields are generated from the VM coils 23a, 23b to modulate the speed of an electron beam.

In the video display apparatus 100 according to the present embodiment, the parallel connection of the upper VM coil 23a and the lower VM coil 23b makes it possible to reduce the synthesized inductance of the VM coils 23a, 23b to half the case conventionally obtained by using one VM coil, as described above. This allows the VM drive circuit 13 to follow the frequencies of a velocity modulation signal even when the velocity modulation signal has high frequencies. In other words, the velocity modulation current VMI supplied to the VM coils 23a, 23b can follow the velocity modulation signal. Consequently, it is possible to modulate the horizontal scanning speed of an electron beam in a high-frequency region, thereby providing contour correction for an image including a high-frequency component. As a result, an image having a high-frequency component can be precisely displayed.

Throughout the above first to seventh embodiments, the apparatus comprising the luminance signal processing circuit 1, color-difference signal processing circuit 2, RGB matrix circuit 3, CRT drive circuit 4, CRT 5, horizontal deflection circuit 90, vertical deflection circuit 91, horizontal deflection coil 92, and vertical deflection circuit 93 corresponds to an electron beam scanning apparatus; each of the VM coils $20_1$ to $20_n$, $21_1$ to $21_n$, 22a, 22b, 23 corresponds to a velocity modulation coil; and each of the scanning-speed modulation circuit blocks 50, $50_1$ to $50_n$ corresponds to a scanning-speed modulation circuit.

Moreover, each of the differentiation circuits 12, $12_1$ to $12_n$, and the first-order differentiation circuit $15_1$ to nth-order differentiation circuit $15_n$ corresponds to a differentiation circuit; each of the LPFs $14_1$ to $14_n$ corresponds to a low pass filter; the CRT 5 corresponds to a cathode ray tube; each of the horizontal deflection circuit 90 and horizontal deflection coil 92 corresponds to a horizontal deflection device; and each of the vertical deflection circuit 91 and vertical deflection coil 93 corresponds to a vertical deflection device.

Further, the VM coils 22a, 22b correspond to a first and a second velocity modulation coils, respectively; the VM drive circuits 13a, 13b according to the sixth embodiment correspond to a first and a second current supply circuits, respectively; the differentiation circuit 12 corresponds to a signal generation circuit; the VM drive circuit 13 in the scanning-speed modulation circuit block 50 according to the seventh embodiment corresponds to a current supply circuit.

**Claims**

1. A video display apparatus **characterized by** comprising:

   an electron beam scanning apparatus that scans on a screen an electron beam according to an input luminance signal, thereby producing a luminance distribution on the screen for the display of an image;
   a plurality of velocity modulation coils provided in said electron beam scanning apparatus, each generating a modulation magnetic field for modulating the scanning speed of said electron beam; and
   a plurality of scanning-speed modulation circuits that supply said plurality of velocity modulation coils with currents for modulating the scanning speed, respectively, based on said input luminance signal.

2. The video display apparatus according to Claim 1, **characterized in that** said plurality of velocity modulation coils have the same number of turns.

3. The video display apparatus according to Claim 2, **characterized in that** each of said plurality of scanning-speed modulation circuits includes a differentiation circuit that differentiates said luminance signal.

4. The video display apparatus according to Claim 1, **characterized in that** said plurality of velocity modulation coils have different numbers of turns.

5. The video display apparatus according to Claim 4, **characterized in that**

   each of said plurality of scanning-speed modulation circuits includes a differentiation circuit that differentiates said luminance signal;
   said differentiation circuits in said plurality of scanning-speed modulation circuits have different differential frequencies; and
   said plurality of scanning-speed modulation circuits are connected to said plurality of velocity modulation coils, respectively, such that a differentiation circuit having a lower differential frequency is combined with a velocity modulation coil having a greater number of turns.

6. The video display apparatus according to Claim 5, **characterized in that**

   each of said plurality of scanning-speed modulation circuits further includes a low pass filter in a stage prior to said differentiation circuit;
   said low pass filters in said plurality of scanning-speed modulation circuits have different cut-off frequencies; and
   the cut-off frequency of said low pass filter in each of said plurality of scanning-speed modulation circuits is set such that a low pass filter having a lower cut-off frequency is combined with a differentiation circuit having a lower differential frequency.

7. The video display apparatus according to Claim 4, **characterized in that**

said plurality of scanning-speed modulation circuits include differentiation circuits that perform differentiation of different orders with respect to said respective luminance signals; and

said plurality of scanning-speed modulation circuits are connected to said plurality of velocity modulating circuits, respectively, such that a differentiation circuit that performs lower-order differentiation is combined with a velocity modulation coil having a greater number of turns.

**8.** The video display apparatus according to Claim 1, **characterized in that** said electron beam scanning apparatus including:

a cathode ray tube;
a horizontal deflection device that deflects an electron beam in said cathode ray tube in the horizontal direction; and
a vertical deflection device that deflects an electron beam in said cathode ray tube in the vertical direction, and
said plurality of velocity modulation coils being arranged so as to modulate the scanning speed of the electron beam in the horizontal direction.

**9.** A video display apparatus **characterized by** comprising:

an electron beam scanning apparatus that scans on a screen an electron beam according to an input luminance signal, thereby producing a luminance distribution on the screen for the display of an image;
first and second saddle-type velocity modulation coils provided opposed to each other in said electron beam scanning apparatus, each producing a modulation magnetic field for modulating the scanning speed of said electron beam; and
a scanning-speed modulation circuit that supplies said first and second velocity modulation coils with currents for modulating the scanning speed, respectively, based on said input luminance signal.

**10.** The video display apparatus according to Claim 9 **characterized in that** said scanning-speed modulation circuit includes:

a signal generation circuit that generates a scanning-speed modulation signal based on said input luminance signal; and
first and second current supply circuits that supply currents for modulating the scanning speed to said first and second velocity modulation coils, respectively, based on said scanning-speed modulation signal generated by said signal generation circuit.

**11.** The video display apparatus according to Claim 9 **characterized in that**

said first and second velocity modulation coils are connected in parallel with each other, and

said scanning-speed modulation circuit includes:

a signal generation circuit that generates a scanning-speed modulation signal based on said input luminance signal; and
a current supply circuit that supplies said first and second velocity modulation coils with currents for modulating the scanning speed, respectively, based on said scanning-speed modulation signal generated by said signal generation circuit.

**12.** The video display apparatus according to Claim 9 **characterized in that** said electron beam scanning apparatus includes:

a cathode ray tube;
a horizontal deflection device that deflects an electron beam in said cathode ray tube in the horizontal direction; and
a vertical deflection device that deflects an electron beam in said cathode ray tube in the vertical direction, and
said first and second velocity modulation coils being arranged so as to modulate the scanning speed of the electron beam in the horizontal direction.

Fig. 1

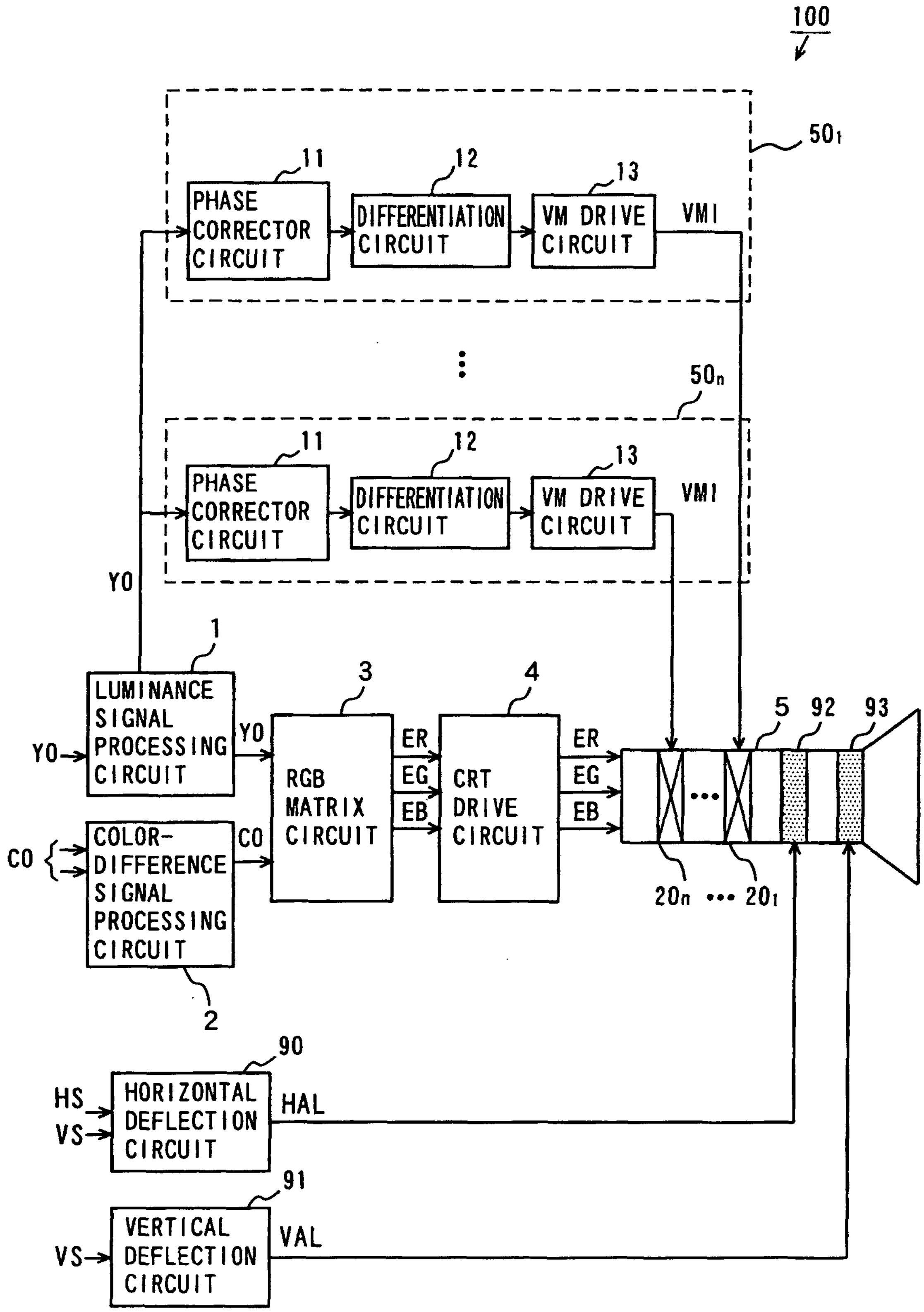
100
50₁
11
PHASE CORRECTOR CIRCUIT
12
DIFFERENTIATION CIRCUIT
13
VM DRIVE CIRCUIT
VMI
50n
11
PHASE CORRECTOR CIRCUIT
12
DIFFERENTIATION CIRCUIT
13
VM DRIVE CIRCUIT
VMI
YO
1
LUMINANCE SIGNAL PROCESSING CIRCUIT
YO
YO
3
RGB MATRIX CIRCUIT
ER
EG
EB
4
CRT DRIVE CIRCUIT
ER
EG
EB
5
92
93
20n ••• 20₁
CO
COLOR-DIFFERENCE SIGNAL PROCESSING CIRCUIT
CO
2
90
HS
VS
HORIZONTAL DEFLECTION CIRCUIT
HAL
91
VS
VERTICAL DEFLECTION CIRCUIT
VAL

Fig. 2

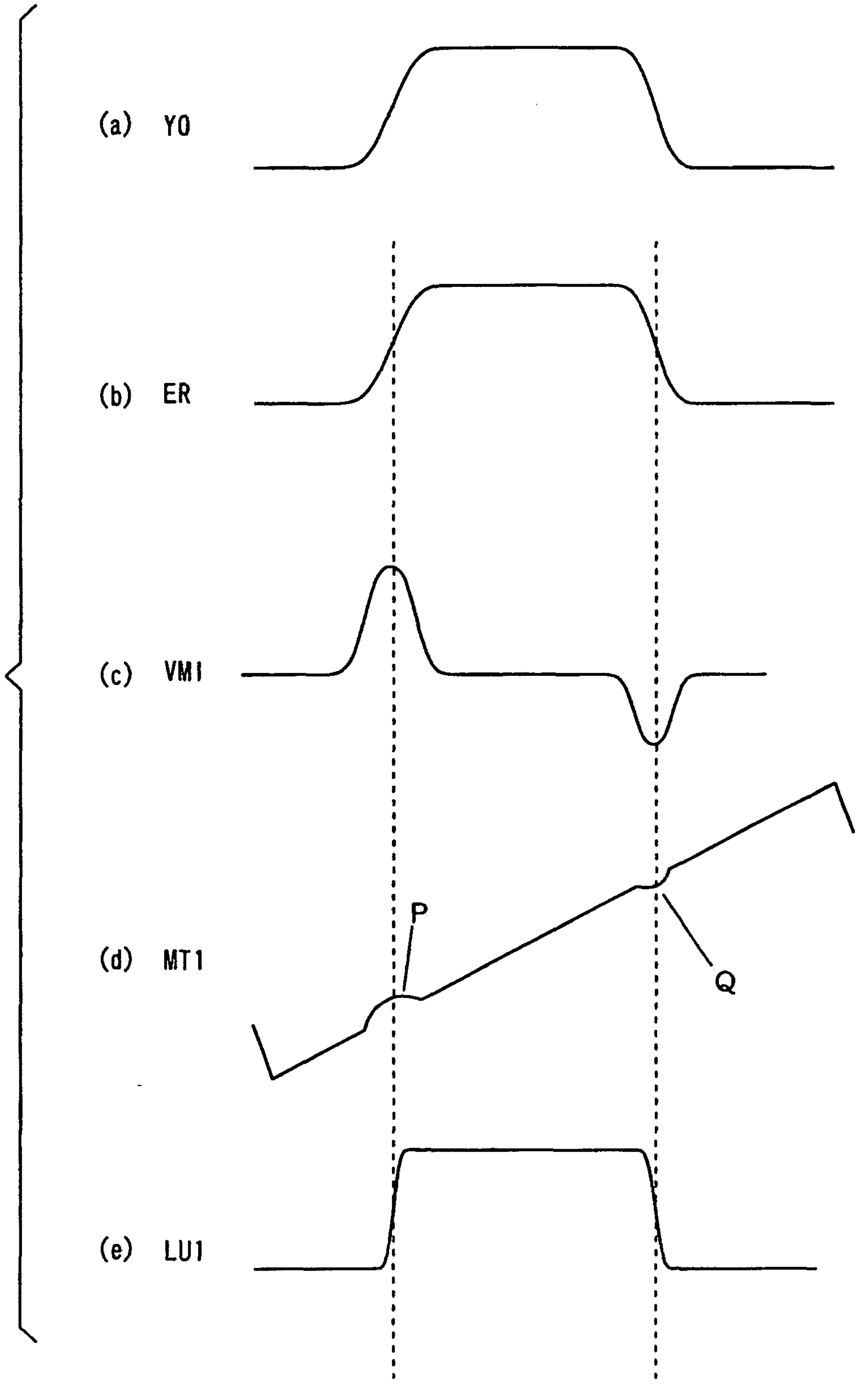

Fig. 3

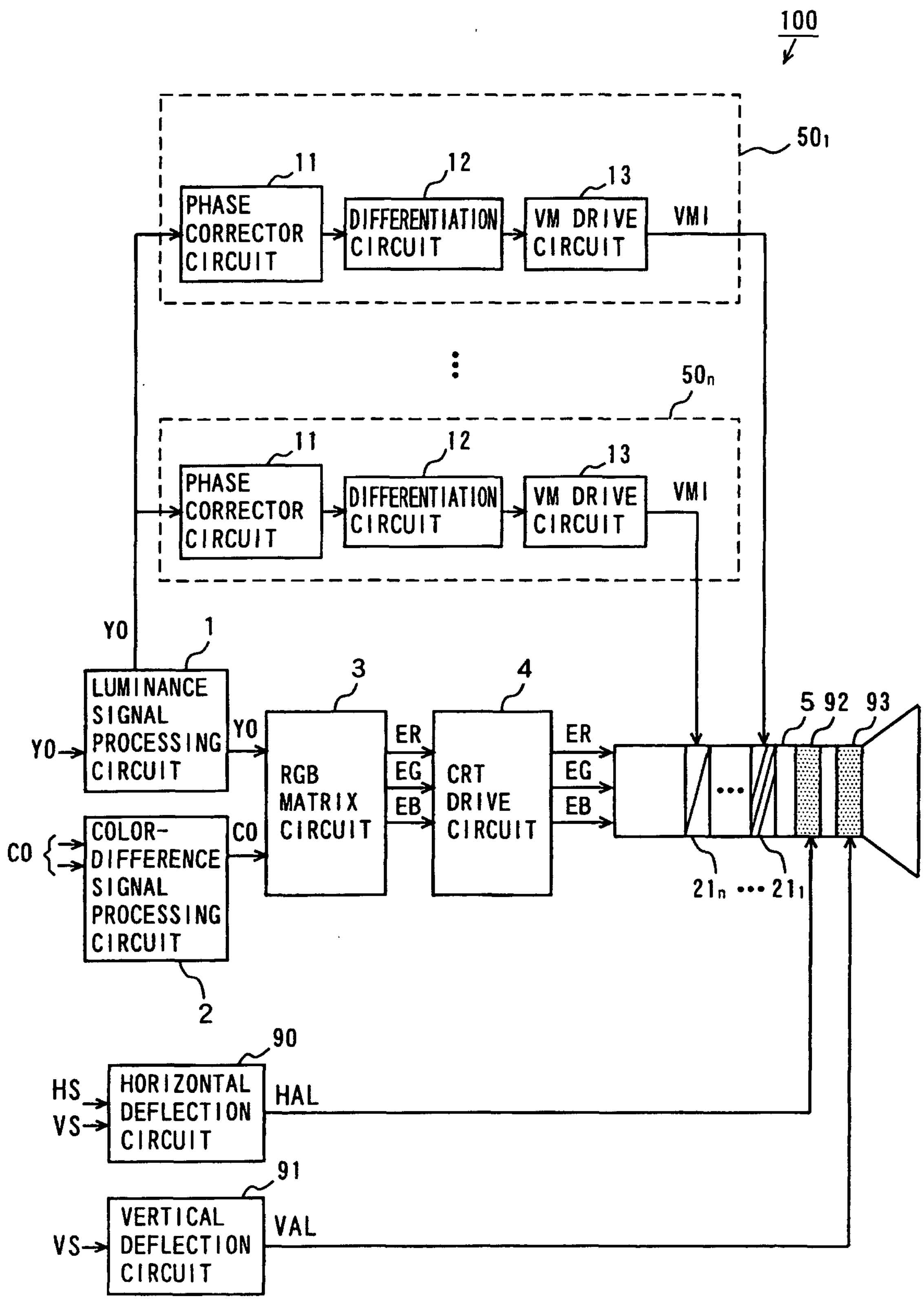
100
$50_1$
11
12
13
PHASE CORRECTOR CIRCUIT
DIFFERENTIATION CIRCUIT
VM DRIVE CIRCUIT
VMI
$50_n$
11
12
13
PHASE CORRECTOR CIRCUIT
DIFFERENTIATION CIRCUIT
VM DRIVE CIRCUIT
VMI
Y0
1
LUMINANCE SIGNAL PROCESSING CIRCUIT
Y0
Y0
3
RGB MATRIX CIRCUIT
ER
EG
EB
4
CRT DRIVE CIRCUIT
ER
EG
EB
5 92 93
$21_n$ ••• $21_1$
C0
COLOR-DIFFERENCE SIGNAL PROCESSING CIRCUIT
C0
2
90
HS
VS
HORIZONTAL DEFLECTION CIRCUIT
HAL
91
VS
VERTICAL DEFLECTION CIRCUIT
VAL

Fig. 4

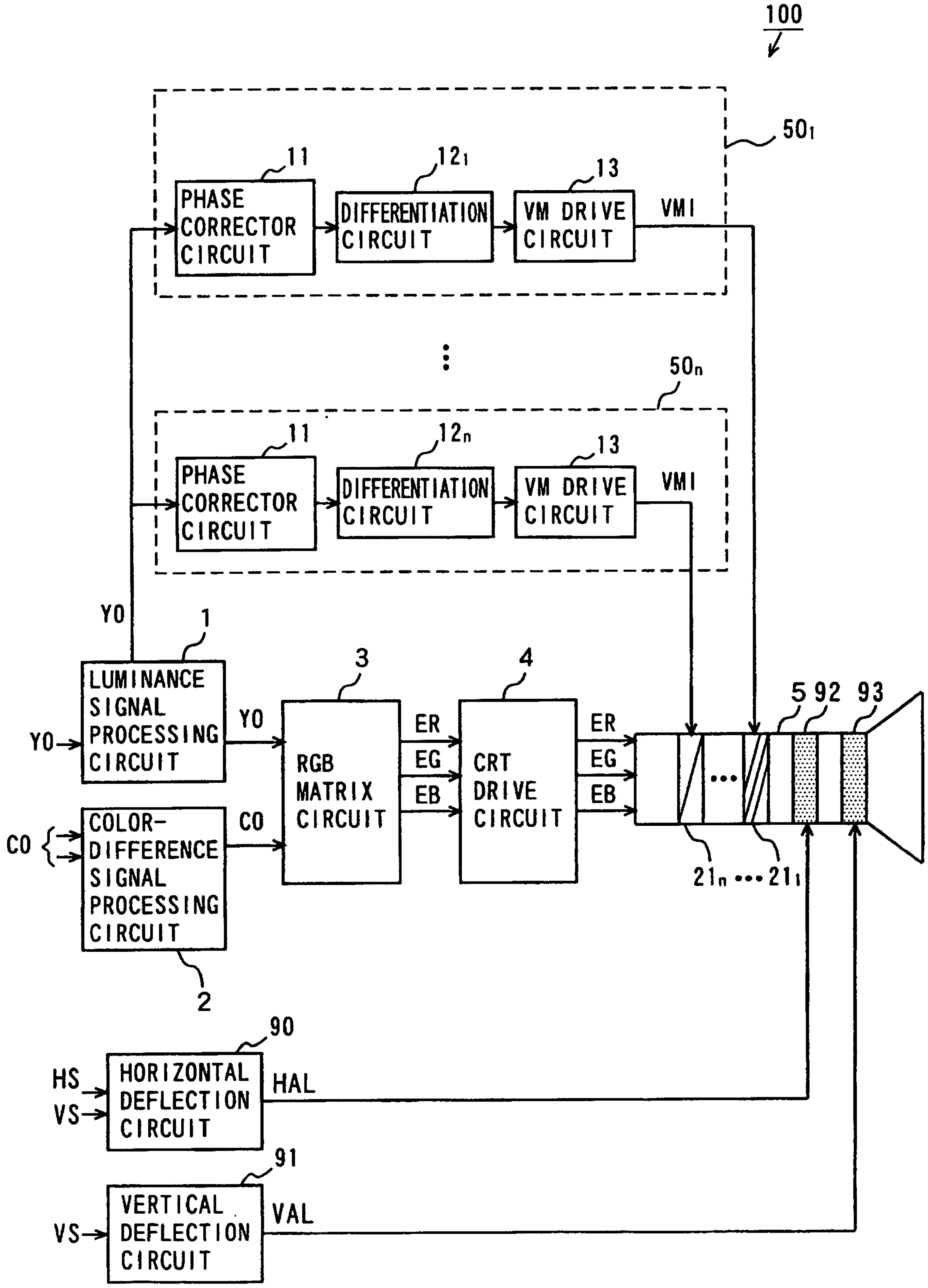
100
50₁
11
12₁
13
PHASE CORRECTOR CIRCUIT
DIFFERENTIATION CIRCUIT
VM DRIVE CIRCUIT
VMI
50n
12n
Y0
1
LUMINANCE SIGNAL PROCESSING CIRCUIT
3
RGB MATRIX CIRCUIT
4
CRT DRIVE CIRCUIT
ER
EG
EB
5 92 93
21n ••• 21₁
C0
COLOR-DIFFERENCE SIGNAL PROCESSING CIRCUIT
2
90
HS
VS
HORIZONTAL DEFLECTION CIRCUIT
HAL
91
VERTICAL DEFLECTION CIRCUIT
VAL

Fig. 5

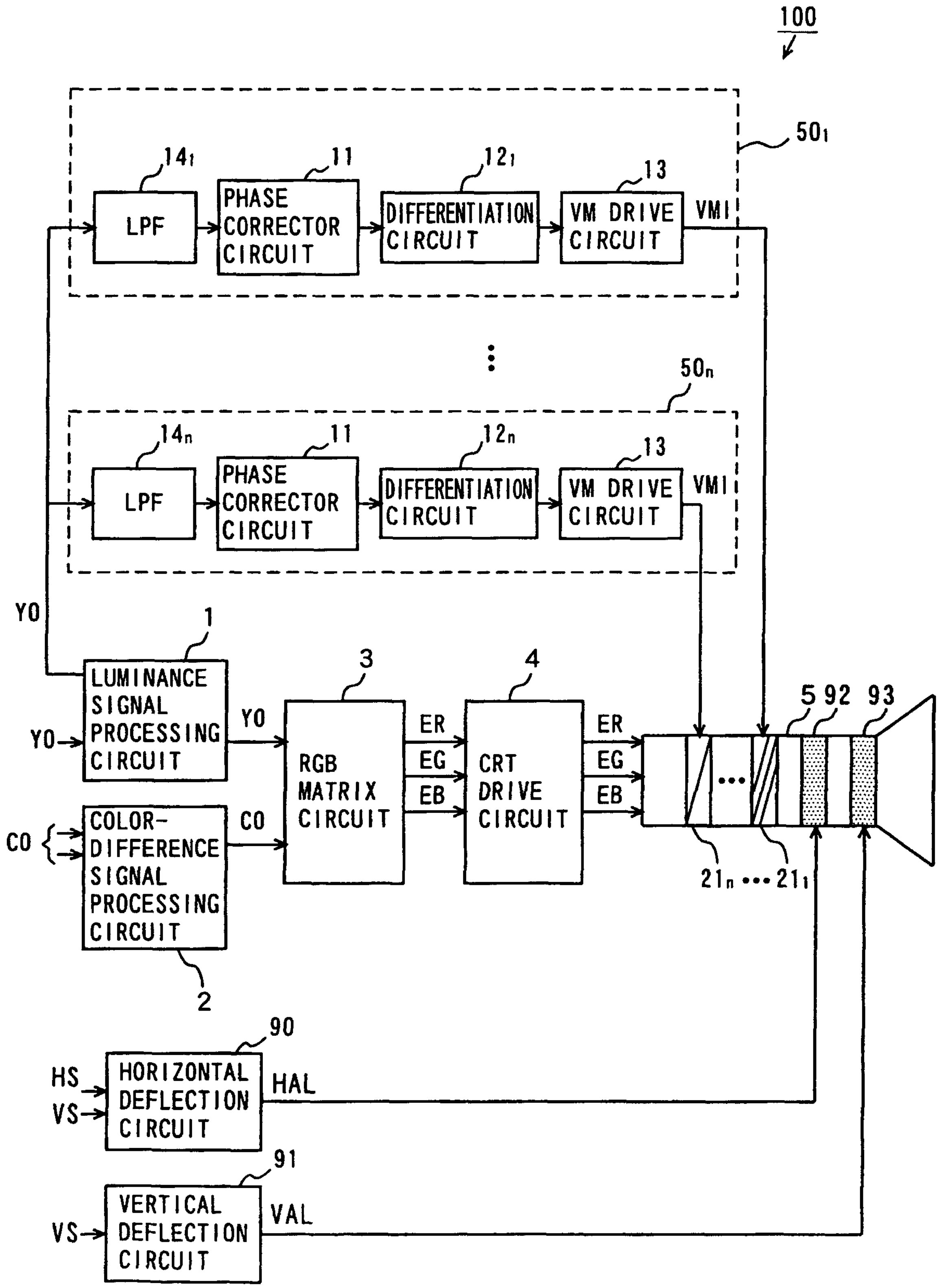
100
50₁
14₁
LPF
11
PHASE CORRECTOR CIRCUIT
12₁
DIFFERENTIATION CIRCUIT
13
VM DRIVE CIRCUIT
VMI
50ₙ
14ₙ
LPF
11
PHASE CORRECTOR CIRCUIT
12ₙ
DIFFERENTIATION CIRCUIT
13
VM DRIVE CIRCUIT
VMI
Y0
1
LUMINANCE SIGNAL PROCESSING CIRCUIT
Y0
Y0
3
RGB MATRIX CIRCUIT
4
CRT DRIVE CIRCUIT
ER
EG
EB
ER
EG
EB
5
92
93
21ₙ ••• 21₁
C0
COLOR-DIFFERENCE SIGNAL PROCESSING CIRCUIT
C0
2
90
HS
VS
HORIZONTAL DEFLECTION CIRCUIT
HAL
91
VS
VERTICAL DEFLECTION CIRCUIT
VAL

Fig. 6

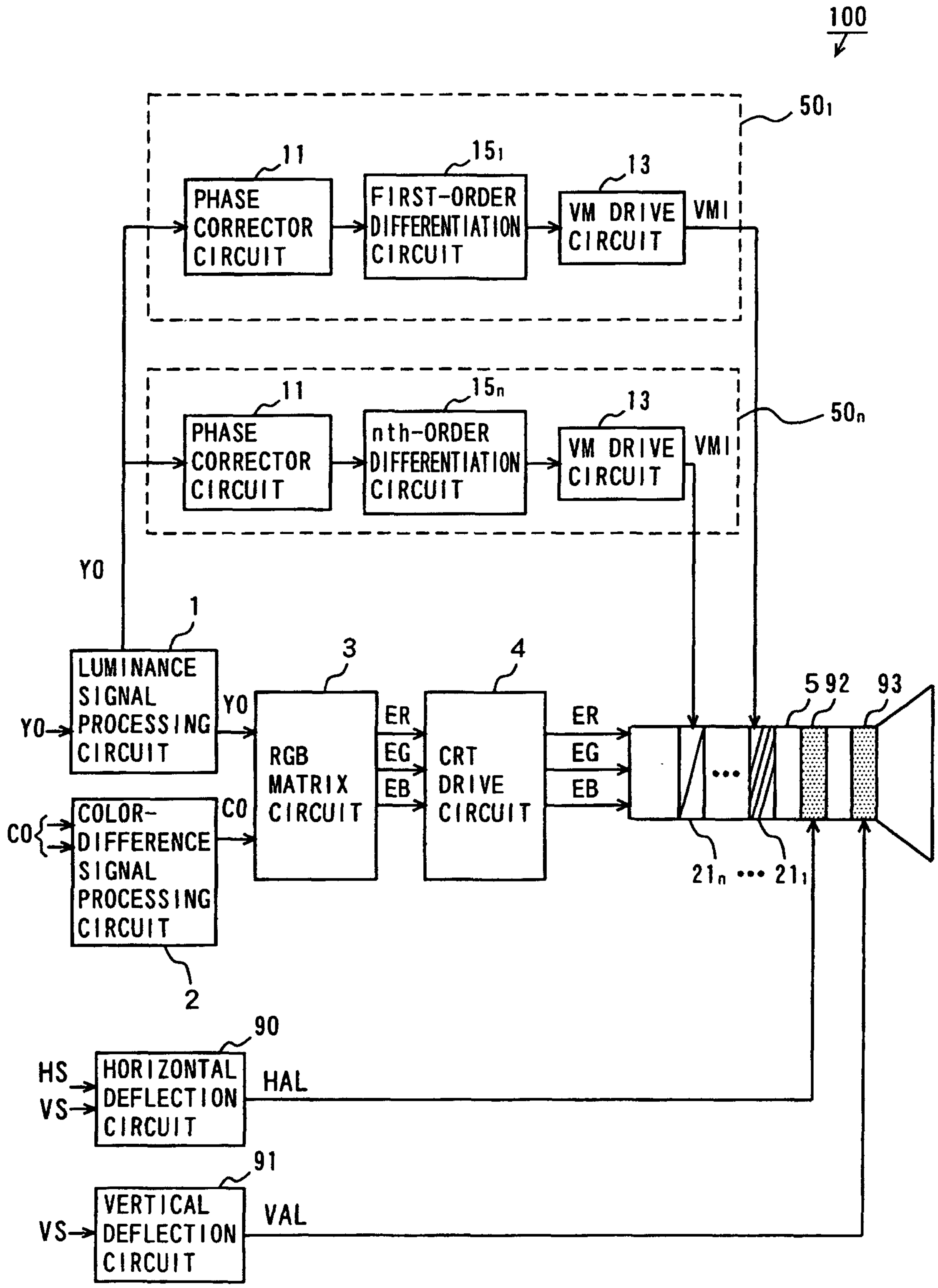
100
$50_1$
11
$15_1$
13
PHASE CORRECTOR CIRCUIT
FIRST-ORDER DIFFERENTIATION CIRCUIT
VM DRIVE CIRCUIT
VMI
$50_n$
11
$15_n$
13
PHASE CORRECTOR CIRCUIT
nth-ORDER DIFFERENTIATION CIRCUIT
VM DRIVE CIRCUIT
VMI
Y0
1
3
4
LUMINANCE SIGNAL PROCESSING CIRCUIT
Y0
Y0
RGB MATRIX CIRCUIT
ER
EG
EB
CRT DRIVE CIRCUIT
ER
EG
EB
5
92
93
C0
COLOR-DIFFERENCE SIGNAL PROCESSING CIRCUIT
C0
$21_n$ ••• $21_1$
2
90
HS
VS
HORIZONTAL DEFLECTION CIRCUIT
HAL
91
VS
VERTICAL DEFLECTION CIRCUIT
VAL

Fig. 7

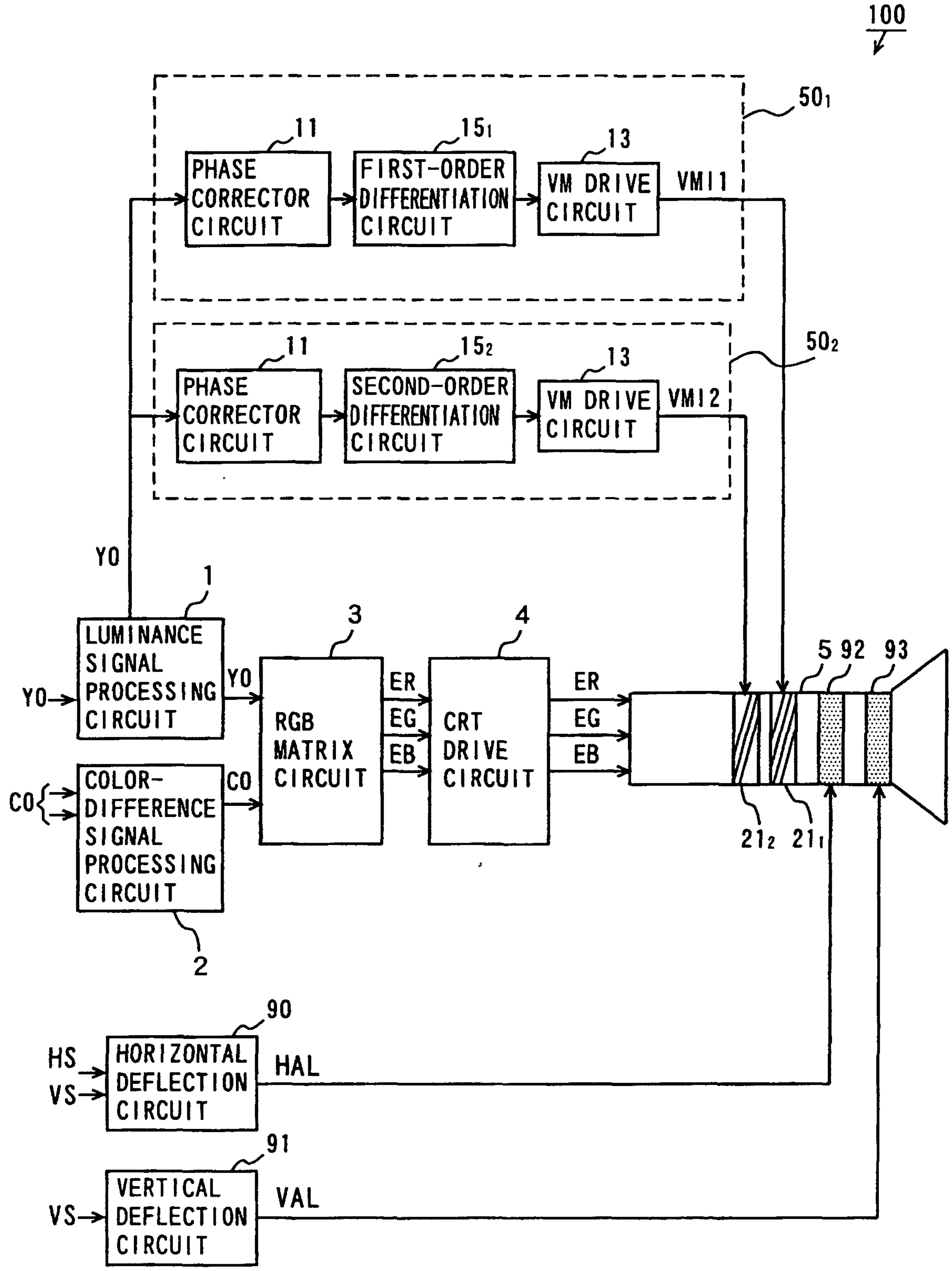
100
$50_1$
11
$15_1$
13
PHASE CORRECTOR CIRCUIT
FIRST-ORDER DIFFERENTIATION CIRCUIT
VM DRIVE CIRCUIT
VMI1
$50_2$
11
$15_2$
13
PHASE CORRECTOR CIRCUIT
SECOND-ORDER DIFFERENTIATION CIRCUIT
VM DRIVE CIRCUIT
VMI2
Y0
1
3
4
LUMINANCE SIGNAL PROCESSING CIRCUIT
Y0
Y0
RGB MATRIX CIRCUIT
ER
EG
EB
CRT DRIVE CIRCUIT
ER
EG
EB
5
92
93
C0
COLOR-DIFFERENCE SIGNAL PROCESSING CIRCUIT
C0
$21_2$
$21_1$
2
90
HS
VS
HORIZONTAL DEFLECTION CIRCUIT
HAL
91
VS
VERTICAL DEFLECTION CIRCUIT
VAL

Fig. 8

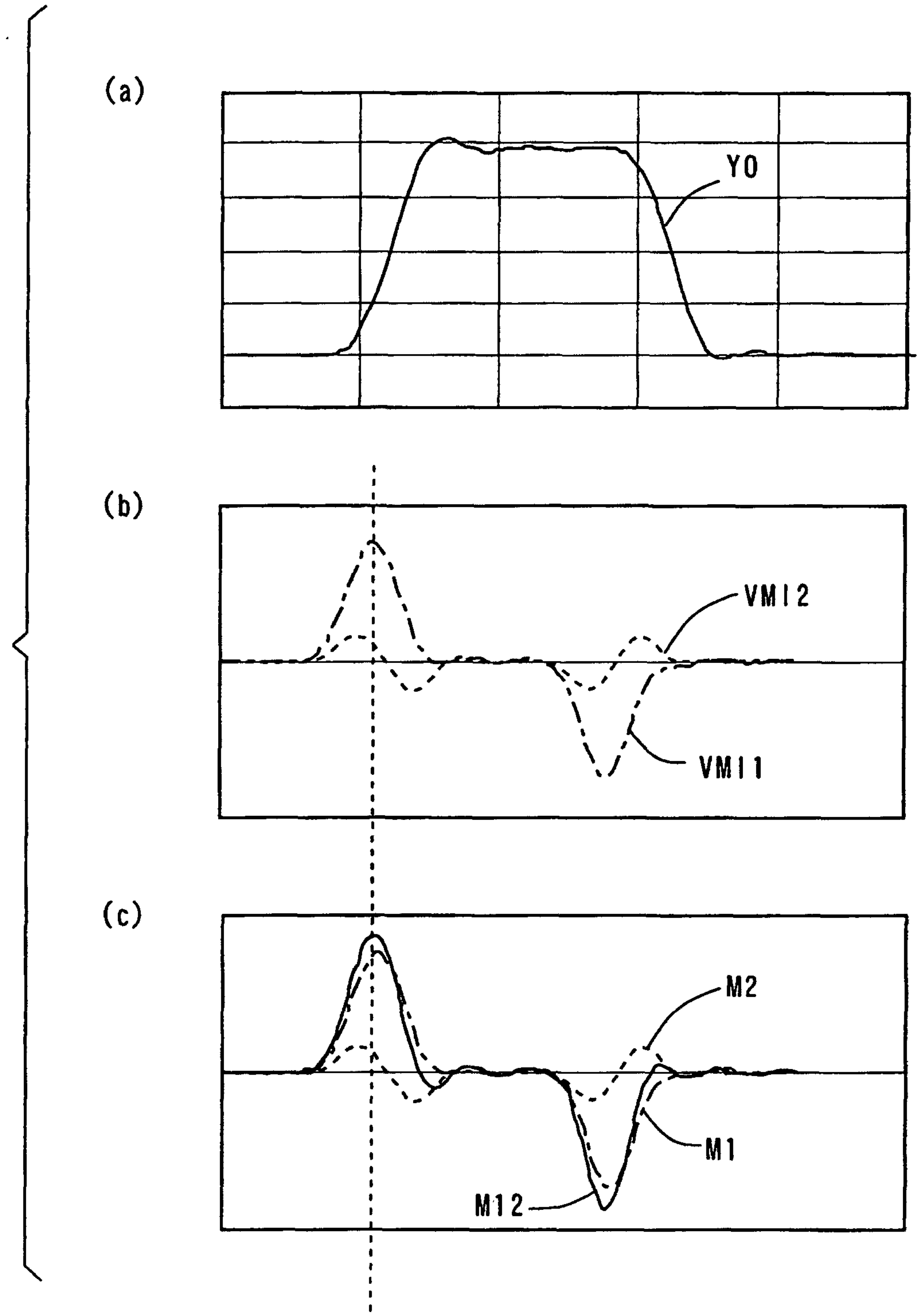

Fig. 9

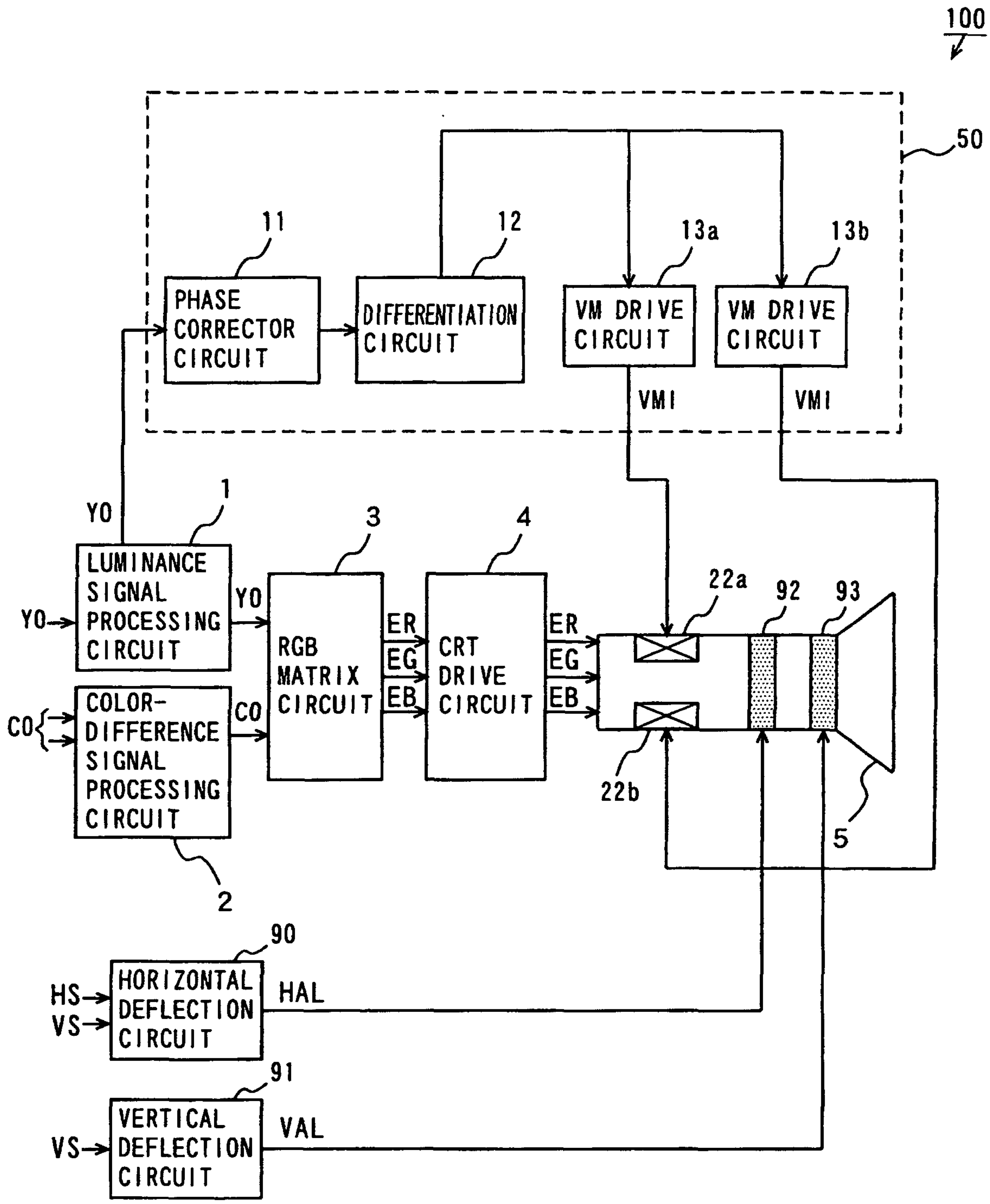
100
50
11
PHASE CORRECTOR CIRCUIT
12
DIFFERENTIATION CIRCUIT
13a
VM DRIVE CIRCUIT
13b
VM DRIVE CIRCUIT
VMI
VMI
YO
1
LUMINANCE SIGNAL PROCESSING CIRCUIT
YO
YO
3
RGB MATRIX CIRCUIT
4
CRT DRIVE CIRCUIT
ER
EG
EB
ER
EG
EB
22a
92
93
22b
5
CO
COLOR-DIFFERENCE SIGNAL PROCESSING CIRCUIT
CO
2
90
HS
VS
HORIZONTAL DEFLECTION CIRCUIT
HAL
91
VS
VERTICAL DEFLECTION CIRCUIT
VAL

Fig. 10

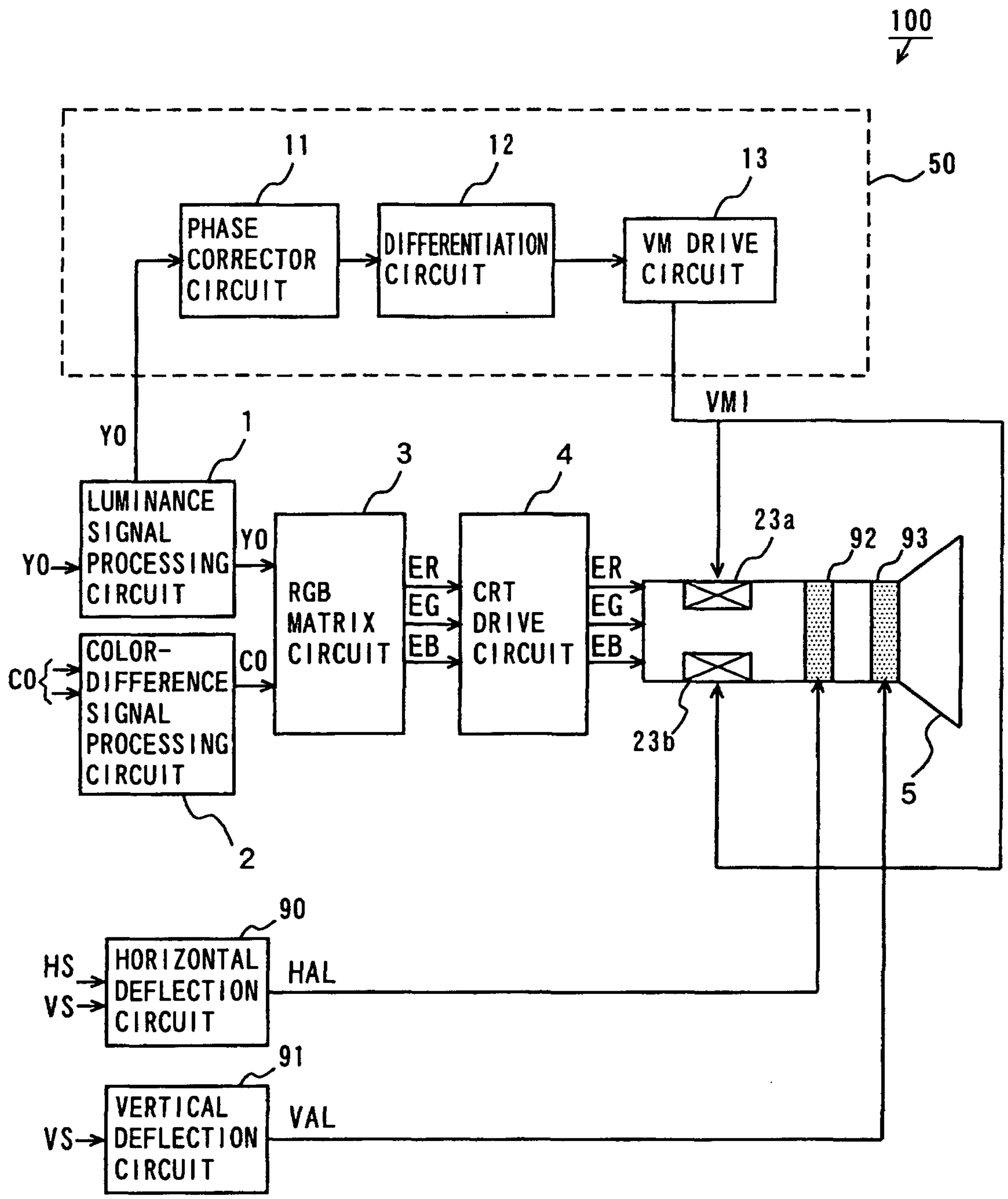
100
50
11
12
13
PHASE CORRECTOR CIRCUIT
DIFFERENTIATION CIRCUIT
VM DRIVE CIRCUIT
VMI
Y0
1
3
4
LUMINANCE SIGNAL PROCESSING CIRCUIT
Y0
Y0
RGB MATRIX CIRCUIT
ER
EG
EB
CRT DRIVE CIRCUIT
ER
EG
EB
23a
92
93
C0
COLOR-DIFFERENCE SIGNAL PROCESSING CIRCUIT
C0
23b
5
2
90
HS
VS
HORIZONTAL DEFLECTION CIRCUIT
HAL
91
VS
VERTICAL DEFLECTION CIRCUIT
VAL

Fig. 11

(a)

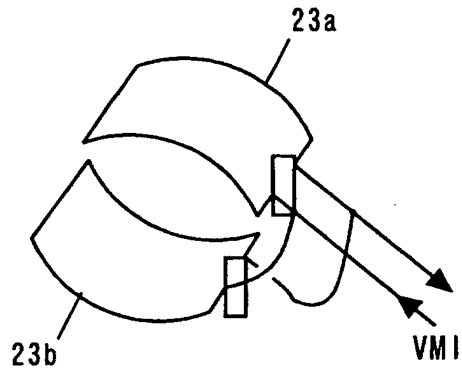


(b)

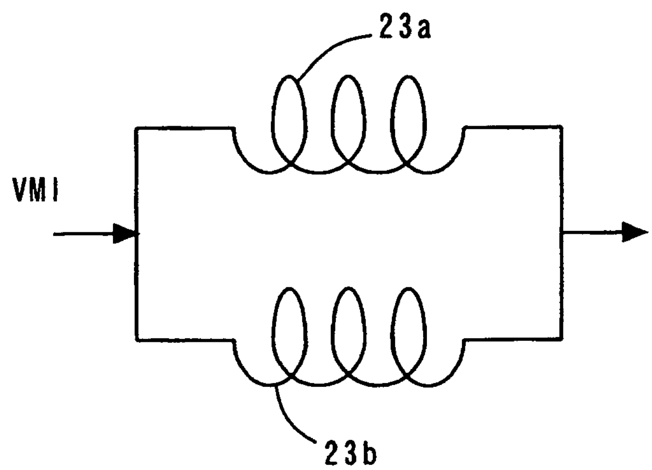

Fig. 12

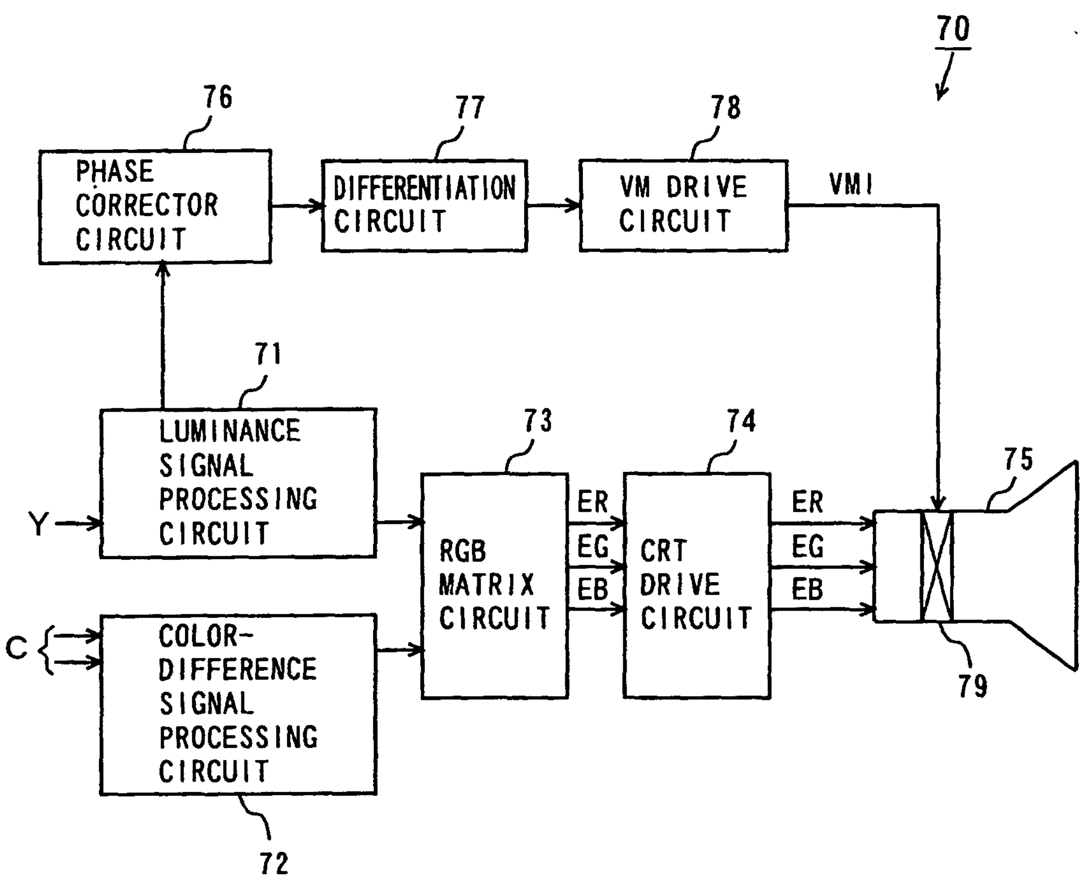
70
76
PHASE CORRECTOR CIRCUIT
77
DIFFERENTIATION CIRCUIT
78
VM DRIVE CIRCUIT
VMI
71
LUMINANCE SIGNAL PROCESSING CIRCUIT
Y
C
COLOR-DIFFERENCE SIGNAL PROCESSING CIRCUIT
72
73
RGB MATRIX CIRCUIT
ER
EG
EB
74
CRT DRIVE CIRCUIT
ER
EG
EB
75
79

Fig. 13

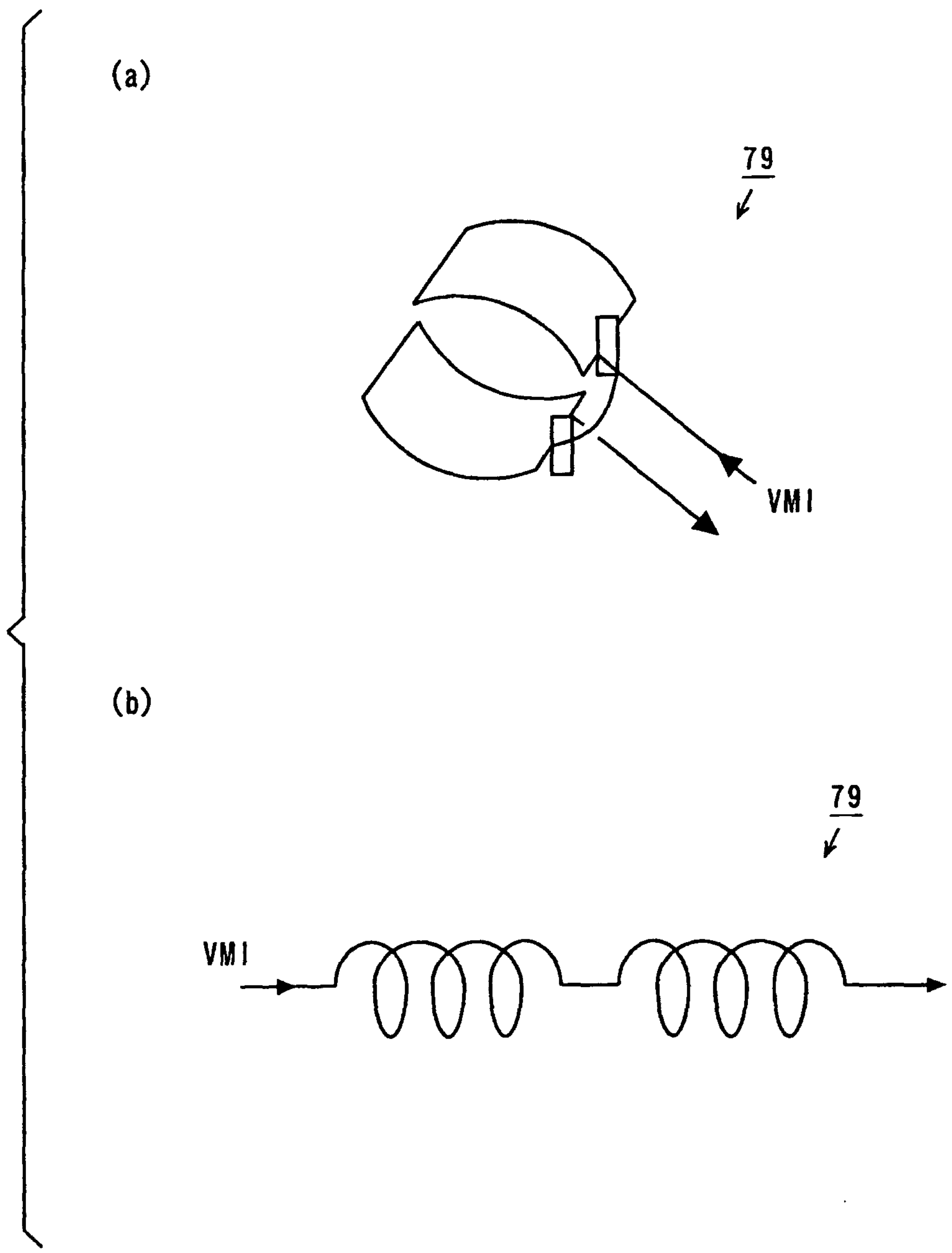

Fig. 14

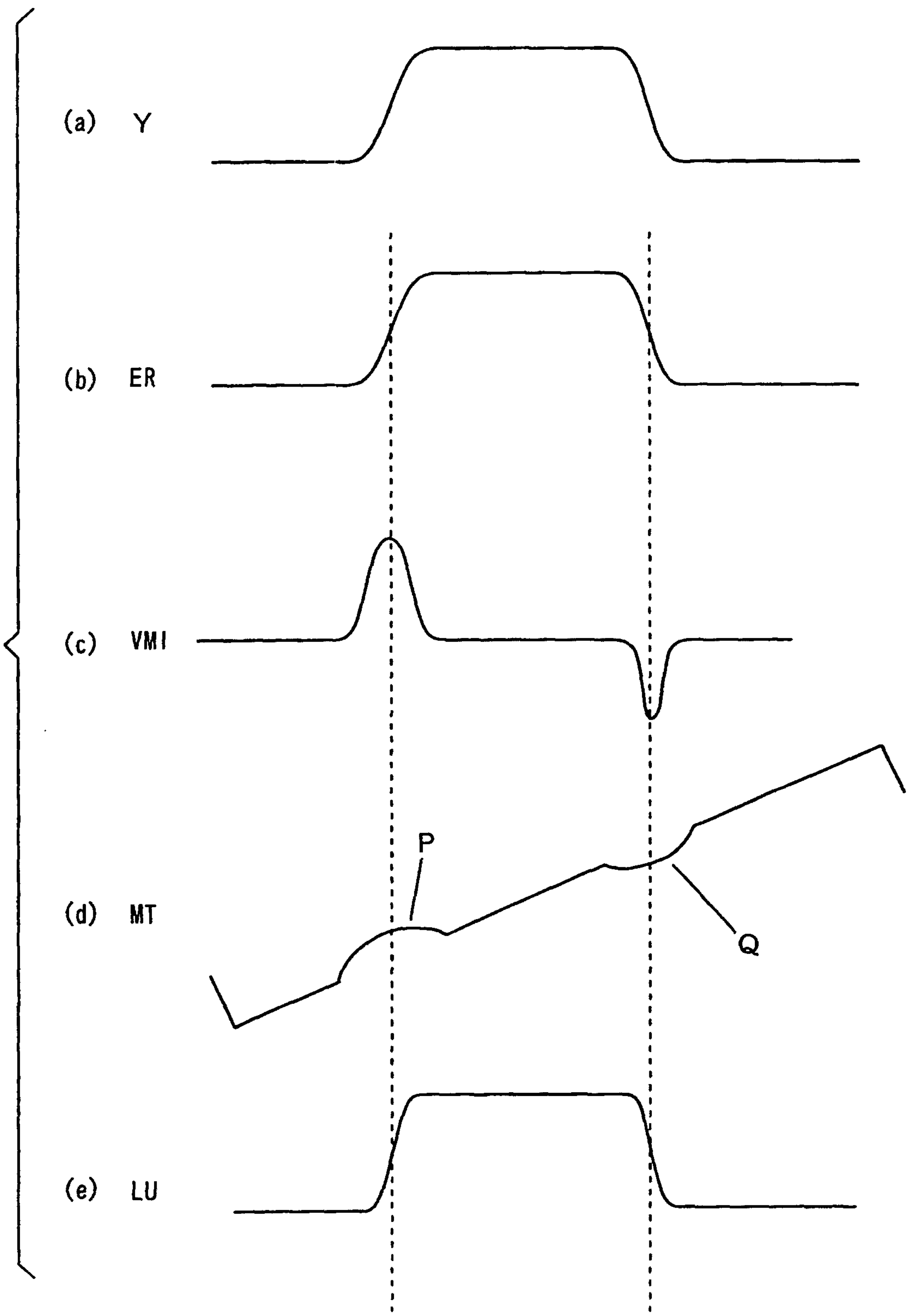

## INTERNATIONAL SEARCH REPORT

International application No.
PCT/JP03/04724

A. CLASSIFICATION OF SUBJECT MATTER
Int.Cl$^7$ H04N3/32

According to International Patent Classification (IPC) or to both national classification and IPC

B. FIELDS SEARCHED

Minimum documentation searched (classification system followed by classification symbols)
Int.Cl$^7$ H04N3/32

Documentation searched other than minimum documentation to the extent that such documents are included in the fields searched

| | | | |
|---|---|---|---|
| Jitsuyo Shinan Koho | 1922-1996 | Toroku Jitsuyo Shinan Koho | 1994-2003 |
| Kokai Jitsuyo Shinan Koho | 1971-2003 | Jitsuyo Shinan Toroku Koho | 1996-2003 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y<br>A | JP 7-272639 A (Mitsubishi Electric Corp.),<br>20 October, 1995 (20.10.95),<br>Full text; Figs. 1 to 6<br>(Family: none) | 1-3,8-12<br>4<br>5-7 |
| X<br>Y<br>A | JP 4-245786 A (Thomson Consumer Electronics, Inc.),<br>02 September, 1992 (02.09.92),<br>Par. No. [0011]<br>& EP 469567 A | 1-3,8-12<br>4<br>5-7 |
| Y | JP 5-119731 A (Sony Corp.),<br>18 May, 1993 (18.05.93),<br>Par. Nos. [0007] to [0011]; Figs. 1 to 5<br>& US 5367380 A | 4 |

☐ Further documents are listed in the continuation of Box C. ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>20 May, 2003 (20.05.03) | Date of mailing of the international search report<br>03 June, 2003 (03.06.03) |
| Name and mailing address of the ISA/<br>Japanese Patent Office<br><br>Facsimile No. | Authorized officer<br><br>Telephone No. |

Form PCT/ISA/210 (second sheet) (July 1998)